# EUROPEAN PATENT APPLICATION

(11) **EP 4 568 370 A1**
(43) Date of publication of application: **11.06.2025**
(21) Application number: 23830116.2
(22) Date of filing: 25.06.2023
(51) Int. Cl.: H04W 56/00

(54) **METHOD AND APPARATUS FOR USE IN COMMUNICATION NODE OF WIRELESS COMMUNICATION**

(30) Priority: 01.07.2022 CN 202210773269
(71) Applicant: SHANGHAI LANGBO COMMUNICATION TECHNOLOGY COMPANY LIMITED, Shanghai 200240 (CN)
(72) Inventor: YU, Qiaoling, Shanghai 201206 (CN); ZHANG, Xiaobo, Shanghai 201206 (CN)
(74) Representative: Gunzelmann, Rainer
(86) International application number: PCT/CN2023/102051
(87) International publication number: WO 2024/001938

(57) **Abstract**

The present application discloses a method and apparatus in a communication node used for wireless communication. The communication node receives a first message; starts a first timer; sends a second message; receives a first target signaling; processes at least one of the first timer or the second timer according to the triggering condition of at least the second message; wherein the first timer is used to determine whether the uplink transmission for the first configured uplink grant is aligned; the second timer is used to determine whether the uplink transmission for the first cell is aligned; the first configured uplink grant is associated with the first cell; the first target signaling is used to determine that the second message is successfully received, or is a MAC CE including at least a timing advance command, or is used to determine that the contention resolution for the first random access process is successfully completed; the second message is sent according to the first configured uplink grant, or is sent in the second random access process.

## Description

### Technical Field

The present application relates to a transmission method and apparatus in a wireless communication system, and in particular to a transmission method and apparatus in an RRC inactive state.

### Background Art

NR (New Radio) supports RRC (Radio Resource Control) inactive (RRC_INACTIVE) RRC state. Until 3GPP (the 3rd Generation Partnership Project) Rel-16, it does not support sending or receiving data in RRC inactive state. Rel-17 carried out the "NR Inactive State Small Data Transmission (SDT)" work item (Work Item, WI), and formulated corresponding technical specifications for MO (UL (Uplink))-SDT, allowing small packet transmission of uplink (UL-oriented) packets in RRC inactive state. In order to reduce power consumption, reduce signaling overhead and shorten latency, Rel-18 established the "MT (DL (Downlink))-SDT (Mobile Terminated-Small Data Transmission)" work item to study the triggering mechanism of MT-SDT, support RA (Random Access)-SDT and CG (Configured Grant)-SDT as uplink responses, and study the MT-SDT process for initial downlink data reception (initial DL data reception) and subsequent uplink or downlink data transmissions (subsequent UL/DL data transmissions) in the RRC inactive state.

### Summary of the invention

When UE (User Equipment) initiates MT-SDT, using R17 MO-SDT as the uplink response can be well compatible with the R17 standard, but the full use of R17 MO-SDT will lead to a waste of uplink resources or an insufficient optimization of the maintenance mechanism of uplink synchronization timing. Therefore, the uplink timing synchronization mechanism for MT-SDT needs to be enhanced.

In response to the above problems, the present application provides a solution used for SDT. In the description of the above problems, NR is used As an embodiment; the present application is also applicable to scenarios such as LTE systems; further, although the present application provides a specific implementation method for MT-SDT (Small Packet Transmission) in an RRC (Radio Resource Control) inactive state, the present application can also be used in scenarios such as multicast MBS (Multicast/Broadcast Service) in an RRC inactive state to achieve a technical effect similar to MT-SDT in an RRC inactive state. Further, although the original intention of the present application is for the Uu air interface, the present application can also be used for the PC5 port. Further, although the original intention of the present application is for the terminal and base station scenario, the present application is also applicable to V2X (Vehicle-to-Everything) scenarios, terminal and relay, and relay and base station communication scenarios, to achieve similar technical effects in terminal and base station scenarios. Furthermore, although the original intention of this application is for the terminal and base station scenario, this application is also applicable to the IAB (Integrated Access and Backhaul) communication scenario, and achieves similar technical effects in the terminal and base station scenario. Furthermore, although the original intention of this application is for the terrestrial network (Terrestrial Network) scenario, this application is also applicable to the non-terrestrial network (Non-Terrestrial Network, NTN) communication scenario, and achieves similar technical effects in the TN scenario. In addition, the use of a unified solution for different scenarios can also help reduce hardware complexity and cost.

As an embodiment, the interpretation of the terminology in the present application refers to the definitions of the TS36 series of specification protocols of 3GPP.

As an embodiment, the interpretation of the terms in the present application refers to the definitions of the TS38 series of specification protocols of 3GPP.

As an embodiment, the interpretation of the terms in the present application refers to the definitions of the TS37 series of specification protocols of 3GPP.

As an embodiment, the interpretation of the terms in the present application refers to the definitions of the standard protocol of IEEE (Institute of Electrical and Electronics Engineers).

It should be noted that, in the absence of a conflict, the embodiments and features in any node of the present application can be applied to any other node. In the absence of a conflict, the embodiments and features in the embodiments of the present application can be arbitrarily combined with each other.

The present application discloses a method in a first node used for wireless communication, characterized by comprising:
receiving a first message, where the first message is an RRC message, and the first message includes at least one of time domain allocation information of a first configuration uplink grant or frequency domain allocation information of the first configuration uplink grant;
in response to receiving the first message, starting a first timer;
sending a second message, wherein the second message is used to request data transmission in the RRC inactive state;
after the second message is sent, receiving first target signaling;
in response to receiving the first target signaling, processing at least one of the first timer or the second timer according to a triggering condition of at least the second message;
wherein, the first timer is used to determine whether the uplink transmission for the first configured uplink grant is aligned; the second timer is used to determine whether the uplink transmission for the first cell is aligned; the first configured uplink grant is associated with the first cell; the first target signaling is used to determine that the second message is successfully received, or the first target signaling is a MAC (Medium Access Control) CE (Control Element) including at least a timing advance command, or the first target signaling is used to determine that contention resolution for a first random access process is successfully completed; the second message is sent according to the first configured uplink grant, or the second message is sent in a second random access process; the first random access process and the second random access process are not the same random access process.

As an embodiment, the first target signaling is a MAC CE including at least a timing advance command; the second message is sent according to the first configured uplink grant.

As an embodiment, the first target signaling is a MAC CE including at least a timing advance command; and the second message is sent during the second random access process.

As an embodiment, the first target signaling is used to determine that contention resolution for the first random access process is successfully completed; and the second message is sent according to the first configured uplink grant.

As an embodiment, the first target signaling is used to determine that contention resolution for the first random access process is successfully completed; the second message is sent in the second random access process; the first random access process and the second random access process are not the same random access process.

As an embodiment, the problem to be solved by the present application includes: how to maintain uplink transmission timing.

As an embodiment, the problem to be solved by the present application includes: how to maintain the uplink transmission timing during the MT-SDT period.

As an embodiment, the problem to be solved by the present application includes: how to maintain CG resources during MT-SDT.

As an embodiment, the problem to be solved by the present application includes: how to maintain the uplink transmission timing of CG resources during MT-SDT.

As an embodiment, the characteristics of the method include: the first timer and the second timer are processed differently during MT-SDT and MO-SDT.

As an embodiment, the characteristics of the method include: maintaining the second timer as much as possible.

As an embodiment, the characteristics of the method include: determining the operating state of at least one of the first timer or the second timer according to the triggering condition of at least the second message.

As an embodiment, the characteristics of the method include: processing the first timer according to the triggering condition of at least the second message.

As an embodiment, the characteristics of the method include: processing the second timer according to the triggering condition of at least the second message.

As an embodiment, the characteristics of the method include: processing the first timer and the second timer according to the triggering condition of at least the second message.

As an embodiment, the characteristics of the method include: the triggering condition of the second message includes being triggered by an upper layer of the RRC sublayer of the first node.

As an embodiment, the characteristics of the method include: the triggering condition of the second message includes being triggered by a paging message.

As an embodiment, the characteristics of the method include: the triggering condition of the second message includes MO-SDT.

As an embodiment, the characteristics of the method include: the triggering condition of the second message includes MT-SDT.

As an embodiment, the benefits of the method include: ensuring uplink synchronization.

As an embodiment, the benefits of the method include: appropriately unbinding MO-SDT and MT-SDT, making MT-SDT more flexible.

According to one aspect of the present application, it is characterized by comprising:
in response to determining to initiate the second random access process, determining whether the first timer is considered expired according to at least a triggering condition of the second message; and
wherein, the behavior determines whether to consider the first timer expired based on the triggering condition of at least the second message, including: if the second message is triggered by an upper layer of the RRC sublayer of the first node, the first timer is considered expired; if the second message is triggered by a paging message, the first timer is not considered expired.

As an embodiment, the characteristics of the method include: for MT-SDT, if the random access process is used to send the second message, the first timer continues to run.

As an embodiment, the characteristics of the method include: for MT-SDT, if the random access process is used to send the second message, continue to maintain the CG resources of the CG-SDT.

As an embodiment, the benefits of the method include: during the MT-SDT period, if there is uplink data, CG resources can be used for transmission to shorten the transmission delay.

According to one aspect of the present application, it is characterized by comprising:
receiving, in response to the second message being sent, second target signaling, the second target signaling being used to determine that the second message is successfully received; and
wherein, the second target signaling is received before the first target signaling.

According to one aspect of the present application, it is characterized in that the behavior processes at least one of the first timer or the second timer according to the triggering condition of at least the second message, including: if the second message is triggered by a paging message, executing a first action set; if the second message is triggered by an upper layer of the RRC sublayer of the first node, the first action set is not executed; the first action set includes stopping the first timer or starting the second timer or clearing at least one of the first configured uplink grant; the first target signaling is used to determine that the second message is successfully received.

As an embodiment, the characteristics of the method include: if the initial transmission of the MT-SDT is successful, the first timer and the first configuration uplink grant are not maintained.

As an embodiment, the characteristics of the method include: after the initial transmission of the MT-SDT is successful, using the second timer to determine whether the uplink transmission is aligned.

As an embodiment, the benefits of the method include: avoiding a waste of resources.

As an embodiment, the characteristics of the method include: avoiding initiating random access.

According to one aspect of the present application, it is characterized in that the behavior of processing at least one of the first timer or the second timer according to the triggering condition of at least the second message includes: if the second message is triggered by an upper layer of the RRC sublayer of the first node, starting or restarting both the second timer and the first timer; if the second message is triggered by a paging message, starting or restarting only the former of the second timer and the first timer; the first target signaling is a MAC CE including at least a timing advance command; and the second message is sent according to the first configured uplink grant.

As an embodiment, the characteristics of the method include:

According to one aspect of the present application, it is characterized in that the behavior of processing at least one of the first timer or the second timer according to the triggering condition of at least the second message includes: if the second message is triggered by an upper layer of the RRC sublayer of the first node, stop the second timer, and start or restart the first timer; if the second message is triggered by a paging message, at least one of the behaviors of "stop the second timer, and start or restart the first timer" is not executed; the first target signaling is used to determine that the contention resolution for the first random access process is successfully completed.

The present application discloses a method used in a second node of wireless communication, characterized by comprising:
sending a first message, where the first message is an RRC message, and the first message includes at least one of time domain allocation information of a first configuration uplink grant or frequency domain allocation information of the first configuration uplink grant;
receiving a second message, the second message being used to request data transmission in the RRC inactive state;
after the second message is received, sending a first target signaling; and
wherein, i response to the first message being received, the receiver of the first message starts a first timer; as a response to the first target signaling being received, the receiver of the first message processes at least one of the first timer or the second timer according to the triggering condition of at least the second message; the first timer is used to determine whether the uplink transmission for the first configured uplink grant is aligned; the second timer is used to determine whether the uplink transmission for the first cell is aligned; the first configured uplink grant is associated with the first cell; the first target signaling is used to determine that the second message is successfully received, or the first target signaling is a MAC CE including at least a timing advance command, or the first target signaling is used to determine that contention resolution for a first random access process is successfully completed; the second message is sent according to the first configured uplink grant, or the second message is sent in a second random access process; the first random access process and the second random access process are not the same random access process; the sender of the second message is the receiver of the first message; the receiver of the first target signaling is the receiver of the first message.

According to one aspect of the present application, it is characterized in that, as a recipient of the first message, determining a response to initiating the second random access process, the recipient of the first message determines whether to consider the first timer expired based on at least the triggering condition of the second message; wherein, the behavior of the recipient of the first message determining whether to consider the first timer expired based on at least the triggering condition of the second message includes: if the second message is triggered by an upper layer of the RRC sublayer of the recipient of the first message, the recipient of the first message considers the first timer expired; if the second message is triggered by a paging message, the first timer is not considered expired by the recipient of the first message.

According to one aspect of the present application, it is characterized by comprising:
sending, in response to the second message being received, second target signaling, wherein the second target signaling is used to determine that the second message is successfully received; and
wherein the second target signaling is received before the first target signaling.

The behavior that the recipient of the first message processes at least one of the first timer or the second timer according to the triggering condition of at least the second message includes: if the second message is triggered by a paging message, the recipient of the first message performs a first action set; if the second message is triggered by an upper layer of the RRC sublayer of the recipient of the first message, the first action set is not performed by the recipient of the first message; the first action set includes stopping the first timer or starting the second timer or clearing at least one of the first configured uplink grant; the first target signaling is used to determine that the second message is successfully received.

According to one aspect of the present application, it is characterized in that the behavior of the receiver of the first message processing at least one of the first timer or the second timer according to the triggering condition of at least the second message includes: if the second message is triggered by an upper layer of the RRC sublayer of the receiver of the first message, the receiver of the first message starts or restarts both the second timer and the first timer; if the second message is triggered by a paging message, the receiver of the first message starts or restarts only the former of the second timer and the first timer; the first target signaling is a MAC CE including at least a timing advance command; and the second message is sent according to the first configured uplink grant.

According to one aspect of the present application, it is characterized in that the behavior of the receiver of the first message processing at least one of the first timer or the second timer according to the triggering condition of at least the second message includes: if the second message is triggered by an upper layer of the RRC sublayer of the receiver of the first message, the receiver of the first message stops the second timer, and starts or restarts the first timer; if the second message is triggered by a paging message, at least one of the behaviors of "stopping the second timer, and starting or restarting the first timer" is not performed by the receiver of the first message; the first target signaling is used to determine that the contention resolution for the first random access process is successfully completed.

The present application discloses a first node used for wireless communication, characterized in that it includes:
a first receiver receives a first message, where the first message is an RRC message, and the first message includes at least one of time domain allocation information of a first configuration uplink grant or frequency domain allocation information of the first configuration uplink grant;
a first processor, in response to receipt of the first message, starting a first timer;
a first transmitter sends a second message, wherein the second message is used to request data transmission in the RRC inactive state;
the first receiver receives first target signaling after the second message is sent; and
the first processor, in response to the first target signaling being received, processing at least one of the first timer or the second timer according to a triggering condition of at least the second message;
wherein, the first timer is used to determine whether the uplink transmission for the first configured uplink grant is aligned; the second timer is used to determine whether the uplink transmission for the first cell is aligned; the first configured uplink grant is associated with the first cell; the first target signaling is used to determine that the second message is successfully received, or the first target signaling is a MAC CE including at least a timing advance command, or the first target signaling is used to determine that contention resolution for a first random access process is successfully completed; the second message is sent according to the first configured uplink grant, or the second message is sent in a second random access process; the first random access process and the second random access process are not the same random access process.

The present application discloses a second node used for wireless communication, characterized in that it includes:
A second transmitter sends a first message, where the first message is an RRC message, and the first message includes at least one of time domain allocation information of a first configuration uplink grant or frequency domain allocation information of the first configuration uplink grant;
a second receiver, receiving a second message, wherein the second message is used to request data transmission in the RRC inactive state; and
the second transmitter sends a first target signaling after the second message is received;
wherein, as a response to the first message being received, the receiver of the first message starts a first timer; as a response to the first target signaling being received, the receiver of the first message processes at least one of the first timer or the second timer according to the triggering condition of at least the second message; the first timer is used to determine whether the uplink transmission for the first configured uplink grant is aligned; the second timer is used to determine whether the uplink transmission for the first cell is aligned; the first configured uplink grant is associated with the first cell; the first target signaling is used to determine that the second message is successfully received, or the first target signaling is a MAC CE including at least a timing advance command, or the first target signaling is used to determine that contention resolution for a first random access process is successfully completed; the second message is sent according to the first configured uplink grant, or the second message is sent in a second random access process; the first random access process and the second random access process are not the same random access process; the sender of the second message is the receiver of the first message; the receiver of the first target signaling is the receiver of the first message.

As an embodiment, compared with the traditional solution, this application has the following advantages:
- Ensure uplink synchronization;
- Make MT-SDT more flexible;
- Shorten transmission delay;
- Avoid wasting resources; and
- Avoid initiating random access.

### BRIEF DESCRIPTION OF THE DRAWINGS

Other features, objects and advantages of the present application will become more apparent by reading the detailed description of non-limiting embodiments with reference to the following drawings:
FIG. 1 shows a flow chart of transmission of a first message, a second message and a first target signaling according to an embodiment of the present application;
FIG. 2 shows a schematic diagram of a network architecture according to an embodiment of the present application;
FIG. 3 is a schematic diagram showing an embodiment of a wireless protocol architecture of a user plane and a control plane according to an embodiment of the present application;
FIG. 4 shows a schematic diagram of a first communication device and a second communication device according to an embodiment of the present application;
FIG. 5 shows a wireless signal transmission flow chart according to an embodiment of the present application;
FIG. 6 shows a wireless signal transmission flow chart according to another embodiment of the present application;
FIG. 7 shows a wireless signal transmission flow chart wherein expiration of a first timer is used to determine execution of a second action set according to an embodiment of the present application;
FIG. 8 shows a wireless signal transmission flow chart for processing at least one of the first timer or the second timer according to a triggering condition of at least a second message according to an embodiment of the present application;
FIG. 9 shows a wireless signal transmission flow chart for processing at least one of the first timer or the second timer according to a trigger condition of at least a second message according to another embodiment of the present application;
FIG. 10 shows a wireless signal transmission flow chart of processing at least one of the first timer or the second timer according to a trigger condition of at least a second message according to yet another embodiment of the present application;
FIG. 11 shows a structural block diagram of a processing device used in a first node according to an embodiment of the present application; and
FIG. 12 shows a structural block diagram of a processing device used in a second node according to an embodiment of the present application.

### DETAILED DESCRIPTION

The technical solution of the present application will be further described in detail below in conjunction with the accompanying drawings. It should be noted that, in the absence of any conflict, the embodiments in the present application and the features in the embodiments can be combined with each other arbitrarily.

### Embodiment 1

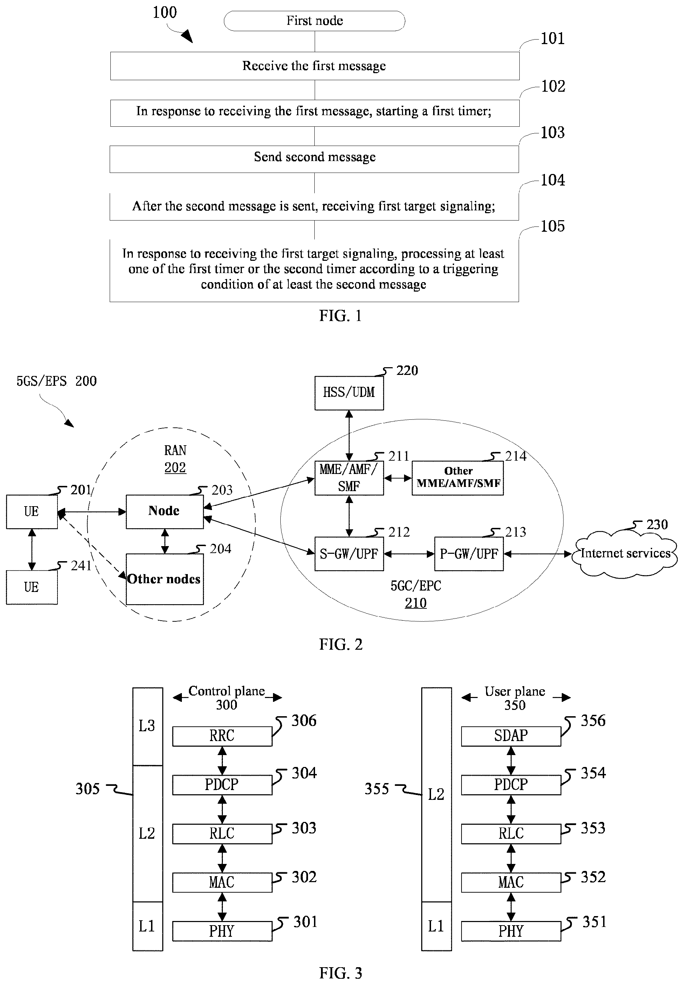

Embodiment 1 illustrates a flowchart of the transmission of a first message, a second message and a first target signaling according to an embodiment of the present application, as shown in FIG. 1. In FIG. 1, each box represents a step, and it should be emphasized that the order of the boxes in the figure does not represent the temporal sequence between the steps represented.

In embodiment 1, the first node in the present application receives a first message in step 101, where the first message is an RRC message, and the first message includes at least one of time domain allocation information of a first configuration uplink grant or frequency domain allocation information of the first configuration uplink grant; in step 102, as a response to the first message being received, a first timer is started; in step 103, a second message is sent, where the second message is used to request data transmission in the RRC inactive state; in step 104, after the second message is sent, a first target signaling is received; in step 105, as a response to the first target signaling being received, at least one of the first timer or the second timer is processed according to the triggering condition of at least the second message; wherein the first timer is used to determine whether the uplink transmission for the first configured uplink grant is aligned; the second timer is used to determine whether the uplink transmission for the first cell is aligned; the first configured uplink grant is associated with the first cell; the first target signaling is used to determine that the second message is successfully received, or the first target signaling is a MAC CE including at least a timing advance command, or the first target signaling is used to determine that contention resolution for a first random access process is successfully completed; the second message is sent according to the first configured uplink grant, or the second message is sent in a second random access process; the first random access process and the second random access process are not the same random access process.

As an embodiment, the sender of the first message is a base station.

As an embodiment, the sender of the first message is a piece of user equipment.

As an embodiment, the first message is transmitted over the air interface.

As an embodiment, the first message is transmitted via SRB 1 (Signaling Radio Bearer 1).

As an embodiment, the first message is transmitted via SRB 3 (Signaling Radio Bearer 3).

As an embodiment, the first message is a downlink (DownLink, DL) message.

As an embodiment, the first message is a SideLink (SL) message.

As an embodiment, the logical channel of the first message is DCCH (Dedicated Control Channel, dedicated control signaling).

As an embodiment, the first message is generated at the RRC sublayer.

As an embodiment, when the first message is received, the first node is in the RRC inactive state.

As an embodiment, when the first message is received, the first node is in the RRC connection state.

As an embodiment, the first message is an RRCRelease message.

As an embodiment, the first message is suspendConfig in the RRCRelease message.

As an embodiment, the first message is an RRCRelease message, and the RRCRelease message includes suspendConfig.

As an embodiment, the first message is an RRCRelease message, and the RRCRelease message includes suspendConfig, and the suspendConfig includes at least one of time domain allocation information of the first configuration uplink grant or frequency domain allocation information of the first configuration uplink grant.

As an embodiment, the first message includes suspendConfig, and the suspendConfig is configured with sdt-Config, and the sdt-Config is configured with the first configuration uplink grant.

As an embodiment, the first message is an RRCRelease message, and the RRCRelease message includes suspendConfig, and the suspendConfig is used to instruct the first node to enter or maintain the RRC inactive state.

As a sub-embodiment of this embodiment, when the first message is received, if the first node is in the RRC inactive state, the RRC inactive state is maintained as a response to the reception of the first message.

As a sub-embodiment of this embodiment, when the first message is received, if the first node is in the RRC connected state, the RRC inactive state is entered as a response to the reception of the first message.

As an embodiment, the first message indicates at least one of the time domain allocation information granted by the first configuration uplink or the frequency domain allocation information granted by the first configuration uplink.

As an embodiment, the first message is used to determine at least one of the time domain allocation information of the first configuration uplink grant or the frequency domain allocation information of the first configuration uplink grant.

As an embodiment, the first message includes time domain allocation information of the first configuration uplink grant and frequency domain allocation information of the first configuration uplink grant.

As an embodiment, the first message includes the frequency domain allocation information of the first configuration uplink grant.

As an embodiment, the first message includes the frequency domain allocation information of the first configuration uplink grant, and a MAC CE indicates the time domain allocation information of the first configuration uplink grant.

As an embodiment, the first message includes the frequency domain allocation information of the first configuration uplink grant, and a DCI (Downlink Control Information) indicates the time domain allocation information of the first configuration uplink grant.

As an embodiment, the first message includes the time domain allocation information of the first configuration uplink grant, and a MAC CE indicates the frequency domain allocation information of the first configuration uplink grant.

As an embodiment, the first message includes the time domain allocation information of the first configuration uplink grant, and a DCI indicates the frequency domain allocation information of the first configuration uplink grant.

As an embodiment, an RRC field in the first message is used to configure the first configuration uplink grant.

As a sub-embodiment of this embodiment, the name of the RRC domain includes at least one of SDT or Config or CG or MAC or PHY or Config or BWP or Initial or SUL or NUL or Dedicated or Uplink.

As a sub-embodiment of this embodiment, the one RRC domain is SDT-Config or SDT-Config-r17 or SDT-Config-r18.

As a sub-embodiment of this embodiment, the one RRC domain is SDT-CG-Config or SDT-CG-Config-r17 or SDT-CG-Config-r18.

As a sub-embodiment of this embodiment, the one RRC domain is SDT-MAC-PHY-CG-Config or SDT-MAC-PHY-CG-Config-r17 or SDT-MAC-PHY-CG-Config-r18.

As a sub-embodiment of this embodiment, the one RRC domain is cg-SDT-Config-Initial-BWP-NUL or cg-SDT-Config-Initial-BWP-NUL-r17 or cg-SDT-Config-Initial-BWP-NUL-r18.

As a sub-embodiment of this embodiment, the one RRC domain is cg-SDT-Config-Initial-BWP-SUL or cg-SDT-Config-Initial-BWP-SUL-r17 or cg-SDT-Config-Initial-BWP-SUL-r18.

As a sub-embodiment of this embodiment, the one RRC domain is BWP-Uplink-Dedicated-SDT or BWP-Uplink-Dedicated-SDT-r17 or BWP-Uplink-Dedicated-SDT-r18.

As a sub-embodiment of this embodiment, the one RRC domain is BWP-Uplink-Dedicated-SDT or BWP-Uplink-Dedicated-SDT-r17 or BWP-Uplink-Dedicated-SDT-r18.

As a sub-embodiment of this embodiment, the one RRC domain is ConfiguredGrantConfig.

As a sub-embodiment of this embodiment, the one RRC domain is CG-SDT-Configuration or CG-SDT-Configuration-r17 or CG-SDT-Configuration-r18.

As an embodiment, if the first message includes the frequency domain allocation information of the first configuration uplink grant, at least one RRC field in the first message indicates the frequency domain allocation information of the first configuration uplink grant.

As a sub-embodiment of this embodiment, the at least one RRC domain includes frequency HoppingOffset.

As a sub-embodiment of this embodiment, the at least one RRC domain includes frequencyHoppingPUSCH-RepTypeB or frequencyHoppingPUSCH-RepTypeB-r16 or frequencyHoppingPUSCH-RepTypeB-r18.

As an embodiment, if the first message includes the time domain allocation information of the first configuration uplink grant, at least one RRC field in the first message indicates the time domain allocation information of the first configuration uplink grant.

As a sub-embodiment of this embodiment, the at least one RRC domain includes timeDomainOffset.

As a sub-embodiment of this embodiment, the at least one RRC domain includes timeDomainAllocation.

As a sub-embodiment of this embodiment, the at least one RRC domain includes timeReferenceSFN or timeReferenceSFN-r16 or timeReferenceSFN-r18.

As a sub-embodiment of this embodiment, the at least one RRC domain includes timeDomainOffset or timeDomainOffset-r17 or timeDomainOffset-r18.

As an embodiment, the first configured uplink grant is configured grant Type 1.

As an embodiment, the first configured uplink grant is used for CG-SDT.

As an embodiment, the time domain allocation information of the first configured uplink grant includes the time domain location information of the first configured uplink grant.

As an embodiment, the time domain allocation information of the first configured uplink grant includes at least one of the symbols or time slots or subframes or radio frames occupied by the first configured uplink grant.

As an embodiment, the frequency domain allocation information of the first configuration uplink grant includes the frequency domain allocation information of the first configuration uplink grant.

As an embodiment, the frequency domain allocation information of the first configuration uplink grant includes at least one of the frequency or bandwidth or carrier or subcarrier of the first configuration uplink grant.

As an embodiment, the first configured uplink grant is used for SDT.

As an embodiment, the first configured uplink grant is for SDT configuration.

As an embodiment, the first configured uplink grant is a PUSCH (Physical Uplink Shared Channel) resource.

As an embodiment, the first configured uplink grant is a UL (UpLink) grant.

As an embodiment, the "received as a response to the first message" includes: when the first message is received and it is determined that the first configured uplink grant is configured.

As an embodiment, the "received as a response to the first message" includes: at least after the first message is received and it is determined that the first configured uplink grant is configured.

As an embodiment, the "starting a first timer as a response to the first message being received" includes: as a response to the first message being received, the RRC sublayer of the first node notifies (instruct) the MAC sublayer of the first node to start the first timer; when the MAC sublayer of the first node receives the notification (instruct) of starting the first timer from the RRC sublayer of the first node, the first timer is started.

As an embodiment, the "starting a first timer as a response to the first message being received" includes: the first node receiving the first message is used to determine to start the first timer.

As an embodiment, the start refers to start.

As an embodiment, the "starting the first timer" means: starting the first timer to count.

As an embodiment, the "starting the first timer" refers to: starting the first timer to run.

As an embodiment, the "starting the first timer" means: making the first timer start counting up.

As an embodiment, the "starting the first timer" means: starting the first timer to count down.

As an embodiment, the first timer is maintained by the first node.

As an embodiment, the first timer is configured via the first message.

As an embodiment, the first timer is a timing alignment timer dedicated to SDT.

As an embodiment, the first timer is used by the first node to maintain uplink timing alignment during SDT.

As an embodiment, the "first timer is used to determine whether the uplink transmission granted for the first configured uplink is aligned" includes: the first timer is used by the first node to maintain uplink timing alignment during CG-SDT.

As an embodiment, the "first timer is used to determine whether the uplink transmission for the first configured uplink grant is aligned" includes: the first timer is used by the first node to determine whether the uplink transmission for the CG-SDT is aligned.

As an embodiment, the "first timer is used to determine whether the uplink transmission granted for the first configured uplink is aligned" includes: at least the first timer is used to determine whether the uplink transmission granted for the first configured uplink is aligned.

As an embodiment, the "first timer is used to determine whether the uplink transmission granted for the first configured uplink is aligned" includes: whether the first timer is running to determine whether the uplink transmission granted for the first configured uplink is aligned.

As an embodiment, the first node determines whether CG-SDT resources are available based on whether at least the first timer is running.

As an embodiment, if the first timer is not running, the uplink transmission for the CG-SDT is considered to be misaligned.

As an embodiment, if the first timer is running and, when the current downlink reference RSRP value increases or decreases by no more than a second threshold compared to the stored downlink reference RSRP value, the uplink transmission for the CG-SDT is considered to be aligned.

As an embodiment, the first timer is a MAC sublayer timer.

As an embodiment, the first timer is not TimeAlignmentTimer.

As an embodiment, the name of the first timer includes TimeAlignmentTimer.

As an embodiment, the first timer is cg-SDT-TimeAlignmentTimer.

As an embodiment, the first timer is associated with a TAG (Timing Advance Group).

As an embodiment, the first timer is associated to PTAG.

As an embodiment, the first timer is used for SDT.

As an embodiment, the first timer is used for CG-SDT.

As an embodiment, the first timer and the first configured uplink grant are configured in the same RRC domain.

As an embodiment, the second message is sent while the first timer is running.

As an embodiment, when the second message is sent, the first timer is running.

As an embodiment, the second message is used to request SDT.

As an embodiment, the second message is used to request MO-SDT.

As an embodiment, the second message is used to request MT-SDT.

As an embodiment, the second message is triggered by the upper layer of the RRC sublayer of the first node.

As an embodiment, the "second message is triggered by the upper layer of the RRC sublayer of the first node" includes: the second message is used to request MO-SDT.

As an embodiment, the "second message is triggered by the higher layer of the RRC sublayer of the first node" includes: the higher layer of the RRC sublayer of the first node requests to restore the RRC connection and is used to trigger the second message.

As an embodiment, the "second message is triggered by the upper layer of the RRC sublayer of the first node" includes: a first condition set is satisfied and is used to trigger the second message, and the first condition set includes the upper layer of the RRC sublayer of the first node requesting to restore the RRC connection.

As an embodiment, the second message is triggered by the paging message.

As an embodiment, the "second message is triggered by the paging message" includes: the second message is used to request MT-SDT.

As an embodiment, the "second message is triggered by the paging message" includes: receiving a paging message used to trigger the second message.

As an embodiment, the "second message is triggered by the paging message" includes: a second condition set is satisfied and is used to trigger the second message, and the second condition set includes receiving a paging message.

As an embodiment, the "while the first timer is running" means that the first timer is timing.

As an embodiment, the "while the first timer is running" means that the first timer is running.

As an embodiment, the "sending a second message according to the first configured uplink grant" includes: sending the second message on the first configured uplink grant.

As an embodiment, the first configured uplink grant is used for an initial transmission of a CG-SDT including the second message.

As an embodiment, a first MAC PDU (Protocol Data Unit) is sent according to the first configuration uplink grant, and the first MAC PDU includes at least a MAC SDU (Service Data Unit) corresponding to the second message.

As an embodiment, the second message is sent via CCCH (Common Control Channel).

As an embodiment, the second message is sent via CCCH 1 (Common Control Channel 1).

As an embodiment, the second message is the CCCH message.

As an embodiment, the MAC SDU corresponding to the second message is a CCCH SDU.

As an embodiment, the second message is sent on the first configuration uplink grant.

As an embodiment, the second message is an RRCResumeRequest message or an RRCResumeRequest1 message.

As an embodiment, each radio bearer in the first radio bearer set is restored along with the second message.

As an embodiment, before the second message is delivered by the RRC sublayer of the first node to a lower layer of the RRC sublayer of the first node, each radio bearer in the first radio bearer set is restored.

As an embodiment, after the content in the second message is set, and before the second message is delivered to a lower layer of the RRC sublayer, each radio bearer in the first radio bearer set is restored.

As an embodiment, before the second message is sent, each radio bearer in the first radio bearer set is restored.

As an embodiment, the second message restores each radio bearer in the first radio bearer set before being sent at the MAC layer.

As an embodiment, each radio bearer in the first radio bearer set is restored just when the second message is sent at the MAC layer.

As an embodiment, each radio bearer in the first set of radio bearers is restored at least before a confirmation message for the second message is received.

As an embodiment, when a period of time has passed since the second message was delivered to a lower layer of the RRC sublayer, each radio bearer in the first radio bearer set is restored.

As an embodiment, when a lower layer of the RRC sublayer sends the second message for the first time, each radio bearer in the first radio bearer set is restored.

As an embodiment, just before restoring each radio bearer in the first radio bearer set, or when restoring each radio bearer in the first radio bearer set, the PDCP entity for each radio bearer in the first radio bearer set is rebuilt, and each radio bearer in the first radio bearer set is restored.

A status report is not triggered when the PDCP entity for each radio bearer in the first radio bearer set is reestablished.

As an embodiment, the first radio bearer set includes at least one DRB ((user) Data Radio Bearer, (user) data radio bearer).

As an embodiment, the first radio bearer set includes at least SRB2 (Signaling Radio Bearer 2).

As an embodiment, the first radio bearer set is determined according to a triggering condition of at least the second message.

As an embodiment, the time to restore each radio bearer in the first radio bearer set is determined according to a triggering condition of at least the second message.

As an embodiment, the first radio bearer set corresponding to when the second message is triggered by a paging message is the same as the first radio bearer set corresponding to when the second message is triggered by an upper layer of the RRC sublayer of the first node.

As an embodiment, the first radio bearer set corresponding to when the second message is triggered by a paging message is different from the first radio bearer set corresponding to when the second message is triggered by an upper layer of the RRC sublayer of the first node.

As an embodiment, the moment when each radio bearer in the first radio bearer set is restored when the second message is triggered by a paging message is the same as the moment when each radio bearer in the first radio bearer set is restored when the second message is triggered by an upper layer of the RRC sublayer of the first node.

As an embodiment, the moment when each radio bearer in the first radio bearer set is restored when the second message is triggered by a paging message is different from the moment when each radio bearer in the first radio bearer set is restored when the second message is triggered by an upper layer of the RRC sublayer of the first node.

As an embodiment, the second message is the first uplink transmission transmitted via CG resources.

As an embodiment, the first target signaling is received at least after the second message is sent.

As an embodiment, the first target signaling is received after the second target signaling is received.

As an embodiment, first target signaling is received in response to the second message being sent.

As an embodiment, a DCI scrambled by the C (Cell)-RNTI (Radio Network Temporary Identifier) of the first node indicates scheduling information of a PDSCH (Physical Downlink Shared Channel); the PDSCH carries at least the first target signaling.

As an embodiment, a DCI scrambled by a CS (Configured Scheduling)-RNTI of the first node indicates scheduling information of a PDSCH; and the PDSCH carries at least the first target signaling.

As an embodiment, the "response as to the first target signaling being received" includes: once the first target signaling is received.

As an embodiment, the "response as the first target signaling is received" includes: if the first target signaling is received.

As an embodiment, the "response as the first target signaling being received" includes: when the first target signaling is received.

As an embodiment, the "response to the first target signaling being received" includes: after the first target signaling is received.

As an embodiment, the first target signaling is received and used to determine to process at least one of the first timer or the second timer according to a triggering condition of at least the second message.

As an embodiment, the receipt of the first target signaling is a trigger condition for determining processing of at least one of the first timer or the second timer.

As an embodiment, the "processing at least one of the first timer or the second timer according to the triggering condition of at least the second message" includes: determining whether to stop at least one of the first timer or the second timer according to the triggering condition of at least the second message.

As an embodiment, the "processing at least one of the first timer or the second timer according to the triggering condition of at least the second message" includes: determining whether to start or restart at least one of the first timer or the second timer according to the triggering condition of at least the second message.

As an embodiment, the "processing at least one of the first timer or the second timer according to the triggering condition of at least the second message" includes: determining whether at least one of the first timer or the second timer is considered expired according to the triggering condition of at least the second message.

As an embodiment, in response to the first target signaling being received, a second timer is started or restarted.

As an embodiment, in response to the first target signaling being received, a second timer is started or restarted, and the first timer is not started and not restarted.

As an embodiment, in response to the first target signaling being received, the first timer is not started and the first timer is not restarted.

As an embodiment, the second timer is maintained by the first node.

As an embodiment, the second timer is a TAG-specific timing alignment timer.

As an embodiment, the second timer is a MAC sublayer timer.

As an embodiment, the second timer is used by the first node to maintain uplink timing alignment during SDT.

As an embodiment, the second timer is for the TAG to which the first cell belongs.

As an embodiment, the second timer is associated with the TAG to which the first cell belongs.

As an embodiment, the index of the TAG associated with the second timer is equal to 0.

As an embodiment, the second timer is associated with a TAG.

As an embodiment, the second timer is associated to PTAG.

As an embodiment, the second timer is used for SDT.

As an embodiment, the second timer is a TimeAlignmentTimer.

As an embodiment, the second timer is configured via TAG-Config IE.

As an embodiment, the second timer is configured through MAC-CellGroupConfig IE.

As an embodiment, the second timer is configured through CellGroupConfig IE.

As an embodiment, the second timer is configured via an RRCResume message.

As an embodiment, the second timer is configured through an RRCSetup message.

As an embodiment, the second timer is configured via an RRCReconfiguration message.

As an embodiment, the second timer and the first timer are configured in different RRC messages.

As an embodiment, the time when the second timer is configured is later than the time when the first timer is configured.

As an embodiment, the "second timer is used to determine whether uplink transmission for the first cell is aligned" includes: the second timer is used by the first node to maintain uplink timing alignment of the first cell.

As an embodiment, the "second timer is used to determine whether uplink transmission for the first cell is aligned" includes: the second timer is used by the first node to determine whether uplink transmission for the first cell is aligned.

As an embodiment, the "second timer is used to determine whether uplink transmission for the first cell is aligned" includes: at least the second timer is used to determine whether uplink transmission for the first cell is aligned.

As an embodiment, the "second timer is used to determine whether uplink transmission for the first cell is aligned" includes: whether the second timer is running to determine whether uplink transmission for the first cell is aligned.

As an embodiment, the "second timer is used to determine whether uplink transmission for the first cell is aligned" includes: whether the second timer is running to determine whether uplink transmission for the TAG to which the first cell belongs is aligned.

As an embodiment, the first node determines whether uplink transmission of the first cell is aligned based on whether at least the second timer is running.

As an embodiment, the first target signaling is used to determine that the second message is successfully received.

As a sub-embodiment of this embodiment, the first target signaling is used to determine that contention resolution for a second random access process is successfully completed; and the second message is sent in the second random access process.

As a sub-embodiment of this embodiment, the first target signaling is used to schedule new transmission.

As a sub-embodiment of this embodiment, the first target signaling includes a DCI, and the DCI is scrambled by the C-RNTI of the first node.

As a sub-embodiment of this embodiment, the first target signaling is used to schedule PUSCH.

As a sub-embodiment of this embodiment, the first target signaling is used to schedule PDSCH.

As a sub-embodiment of this embodiment, the second message is sent according to the first configured uplink grant.

As a sub-embodiment of this embodiment, the second message is sent in the second random access process.

As a sub-embodiment of this embodiment, the first target signaling is used to determine that the initial transmission of the CG-SDT is successfully completed.

As a sub-embodiment of this embodiment, the first target signaling is physical layer signaling.

As a sub-embodiment of this embodiment, the first target signaling includes a DCI, and the first target signaling is scrambled by the C-RNTI of the first node in the first cell.

As a sub-embodiment of this embodiment, the first target signaling is transmitted on PDCCH.

As a sub-embodiment of this embodiment, the first target signaling includes a MAC layer signaling.

As a sub-embodiment of this embodiment, the first target signaling includes a MAC SDU.

As a sub-embodiment of this embodiment, the first target signaling includes a MAC CE.

As a sub-embodiment of this embodiment, the first target signaling includes a DCI, the DCI is addressed to the TEMPORARY_C-RNTI, and the message B-2 indicates the TEMPORARY_C-RNTI.

As a sub-embodiment of this embodiment, the first target signaling includes a DCI, the DCI is addressed to the TEMPORARY _C-RNTI, and the message 2-2 indicates the TEMPORARY_C-RNTI.

As a sub-embodiment of this embodiment, the first target signaling includes a DCI, the DCI is addressed to the MSGB-RNTI, and the PRACH opportunity of sending the random access preamble in the message A-2 is used to determine the MSGB-RNTI.

As a sub-embodiment of this embodiment, the first target signaling includes a MAC SDU.

As a sub-embodiment of this embodiment, the first target signaling includes a MAC CE.

As a sub-embodiment of this embodiment, the first target signaling is used to determine that the second random access process is successfully completed.

As a sub-embodiment of this embodiment, the first target signaling is used to determine that contention resolution for the second random access process is successfully completed.

As a sub-embodiment of this embodiment, the first target signaling is the message B-2, and the message B-2 includes successRAR MAC subPDU.

As a sub-embodiment of this embodiment, the UE Contention Resolution Identity in the successRAR MAC subPDU included in the first target signaling matches the MAC SDU corresponding to the second message.

As a sub-embodiment of this embodiment, the first target signaling is the message 4-2, and the message 4-2 includes UE Contention Resolution Identity MAC CE.

The UE Contention Resolution Identity in the UE Contention Resolution Identity MAC CE included in the first target signaling matches the MAC SDU corresponding to the second message.

As a sub-embodiment of this embodiment, the first target signaling includes a DCI, and the first target signaling is scrambled by the C-RNTI of the first node in the first cell; the second message is sent according to the first configured uplink grant.

As a sub-embodiment of this embodiment, the first target signaling includes a DCI, and the first target signaling is scrambled by the C-RNTI of the first node in the first cell; the first target signaling is used to determine that the first MAC PDU is successfully sent; and the second message is sent according to the first configured uplink grant.

As a sub-embodiment of this embodiment, the first target signaling includes a successRAR MAC subPDU, and the UE Contention Resolution Identity in the successRAR MAC subPDU matches the MAC SDU corresponding to the second message; and the second message is sent in the second random access process.

As a sub-embodiment of this embodiment, the first target signaling includes UE Contention Resolution Identity MAC CE, and the UE Contention Resolution Identity in the UE Contention Resolution Identity MAC CE matches the MAC SDU corresponding to the second message; and the second message is sent in the second random access process.

As an embodiment, the first target signaling is a MAC CE including at least a timing advance command.

As a sub-embodiment of this embodiment, the first target signaling is not received during the random access process.

As a sub-embodiment of this embodiment, the first target signaling occupies 1 octet.

As a sub-embodiment of this embodiment, the first target signaling occupies 2 octets.

As a sub-embodiment of this embodiment, the first target signaling is Timing Advance Command MAC CE.

As a sub-embodiment of this embodiment, the MAC sub-header corresponding to the first target signaling includes a LCID (Logical Channel ID) field, and the LCID field is set to 6 1.

As a sub-embodiment of this embodiment, the timing advance command included in the first target signaling is a Timing Advance Command field.

As a sub-embodiment of this embodiment, the timing advance command included in the first target signaling includes 6 bits.

As a sub-embodiment of this embodiment, the timing advance command included in the first target signaling is used to indicate an index value TA (0, 1, 2...63) of the timing adjustment amount.

As a sub-embodiment of this embodiment, the value of the timing advance command included in the first target signaling is an integer not less than 0 and not greater than 63.

As a sub-embodiment of this embodiment, the first target signaling includes a TAG Identity (TAG ID) field, and the TAG Identity field indicates the index of the TAG associated with the second timer.

As a sub-embodiment of this embodiment, the first target signaling consists of the timing advance command field and the TAG Identity (TAG ID) field.

The TAG Identity field included in the first target signaling is set to 0.

The TAG Identity field included in the first target signaling is set to the index of the TAG associated with the second timer.

The TAG Identity field included in the first target signaling includes 2 bits.

As a sub-embodiment of this embodiment, the first target signaling consists of the timing advance command and the TAG Identity field, and the value of the timing advance command is for the TAG indicated by the TAG Identity field.

As a sub-embodiment of this embodiment, the first target signaling is Absolute Timing Advance Command MAC CE.

As a sub-embodiment of this embodiment, the MAC sub-header corresponding to the first target signaling includes an eLCID (extendedLCID) field, and the eLCID field is set to 252.

As a sub-embodiment of this embodiment, the timing advance command included in the first target signaling includes 12 bits.

As a sub-embodiment of this embodiment, the timing advance command included in the first target signaling is used to indicate an index value TA (0, 1, 2...3846) of the timing adjustment amount.

As a sub-embodiment of this embodiment, the value of the timing advance command included in the first target signaling is an integer not less than 0 and not greater than 3846.

As a sub-embodiment of this embodiment, the first target signaling consists of the timing advance command field and the reserved field (R Field).

As an embodiment, the first target signaling is used to determine that contention resolution for the first random access process is successfully completed.

As a sub-embodiment of this embodiment, after the second message is sent, the first random access process is initiated.

As a sub-embodiment of this embodiment, the first random access process is initiated after the second target signaling is received.

As a sub-embodiment of this embodiment, a DCI scrambled by MSGB-RNTI indicates scheduling information of a PDSCH; the PDSCH carries at least the first random access response.

As a sub-embodiment of this embodiment, a DCI scrambled by RA-RNTI indicates scheduling information of a PDSCH; the PDSCH carries at least the first random access response.

As a sub-embodiment of this embodiment, a DCI scrambled by the C-RNTI indicates scheduling information of a PDSCH; the PDSCH carries at least the first random access response.

As a sub-embodiment of this embodiment, the first random access response is received during the running of msgB-ResponseWindow.

As a sub-embodiment of this embodiment, the first random access response is received during the running of ra-ResponseWindow.

As a sub-embodiment of this embodiment, when there are insufficient uplink resources, the first random access process is initiated.

As a sub-embodiment of this embodiment, when uplink data arrives, the first random access process is initiated.

As a sub-embodiment of this embodiment, when uplink data mapped to the radio bearers included in the first bearer set arrives, the first random access process is initiated.

As a sub-embodiment of this embodiment, when uplink data mapped to a radio bearer outside the first bearer set arrives, the first random access process is initiated.

As a sub-embodiment of this embodiment, when the current downlink reference RSRP value increases or decreases by more than a second threshold compared with the stored downlink reference RSRP value, the first random access process is initiated.

As a sub-embodiment of this embodiment, in the first random access process, message 1-1 is sent; as a response to the message 1-1 being sent, message 2-1 is received; as a response to the message 2-1 being received, message 3-1 is sent; as a response to the message 3-1 being sent, the first target signaling is received.

As a sub-embodiment of this embodiment, the message 2-1 is a MAC RAR, and the message 3-1 is sent according to the uplink grant indicated by the MAC RAR.

As a sub-embodiment of this embodiment, the message 2-1 includes at least a timing advance command.

As a sub-embodiment of this embodiment, the timing advance command included in the message 2-1 is a Timing Advance Command field.

As a sub-embodiment of this embodiment, the timing advance command included in the message 2-1 includes 12 bits.

As a sub-embodiment of this embodiment, the timing advance command included in the message 2-1 is used to indicate an index value TA (0, 1, 2...3846) of the timing adjustment amount.

As a sub-embodiment of this embodiment, the value of the timing advance command included in the message 2-1 is an integer not less than 0 and not greater than 63.

As a sub-embodiment of this embodiment, the format of the message 2-1 refers to Section 6.2.3 of 3GPP TS38.321.

As a sub-embodiment of this embodiment, as a response to the message 2-1 being received, the timing advance command in the message 2-1 is applied.

As a sub-embodiment of this embodiment, the second timer is started in response to the message 2-1 being received.

As a sub-embodiment of this embodiment, when the message 2-1 is received, the second timer is not running.

As a sub-embodiment of this embodiment, in the first random access process, message A-1 is sent; as a response to the message A-1 being sent, message B-1 is received; as a response to the message B-1 being received, message 3-1 is sent; as a response to the message 3-1 being sent, the first target signaling is received.

As a sub-embodiment of this embodiment, the message B-1 is a fallbackRAR, and the message 3-1 is sent according to the uplink grant indicated by the fallbackRAR.

As a sub-embodiment of this embodiment, the message B-1 includes at least a timing advance command.

As a sub-embodiment of this embodiment, the timing advance command included in the message B-1 is a Timing Advance Command field.

As a sub-embodiment of this embodiment, the timing advance command included in the message B-1 includes 12 bits.

As a sub-embodiment of this embodiment, the timing advance command included in the message B-1 is used to indicate an index value TA (0, 1, 2...3846) of the timing adjustment amount.

As a sub-embodiment of this embodiment, the value of the timing advance command included in the message B-1 is an integer not less than 0 and not greater than 63.

As a sub-embodiment of this embodiment, the format of the message B-1 refers to Section 6.2.3a of 3GPP TS 38.321.

As a sub-embodiment of this embodiment, in response to the message B-1 being received, the timing advance command in the message B-1 is applied; the message B-1 is a fallbackRAR.

As a sub-embodiment of this embodiment, the second timer is started in response to the message B-1 being received; the message B-1 is a fallbackRAR.

As a sub-embodiment of this embodiment, when the message B-1 is received, the second timer is not running.

As a sub-embodiment of this embodiment, in the first random access process, message A-1 is sent; and as a response to the sending of the message A-1, the first target signaling is received.

As a sub-embodiment of this embodiment, the first target signaling includes at least a timing advance command.

As a sub-embodiment of this embodiment, the first target signaling includes Absolute Timing Advance Command MAC CE.

As a sub-embodiment of this embodiment, the message 1-1 is a random access preamble.

As a sub-embodiment of this embodiment, the message 1-1 is not used to indicate SDT.

As a sub-embodiment of this embodiment, the message 1-1 is used to indicate SDT.

As a sub-embodiment of this embodiment, the message A-1 includes a random access preamble and a MAC PDU, the MAC PDU includes a C-RNTI MAC CE, the C-RNTI MAC CE includes the C-RNTI of the first node in the first cell, and the MAC PDU is sent according to the uplink grant associated with the random access preamble.

As a sub-embodiment of this embodiment, the random access preamble included in the message A-1 is not used to indicate SDT.

As a sub-embodiment of this embodiment, the random access preamble included in the message A-1 is used to indicate SDT.

As a sub-embodiment of this embodiment, the message 3-1 includes a C-RNTI MAC CE, and the C-RNTI MAC CE includes the C-RNTI of the first node in the first cell.

As an embodiment, the first cell is a PCell (Primary Cell) maintained when the first node enters the RRC inactive state from the RRC connected state.

As an embodiment, the first cell is a cell wherein the first node receives the first message.

As an embodiment, the first cell is a designated cell in a RAN (RAN-based Notification Area) maintained by the first node.

As an embodiment, the first cell is any cell in the RNA maintained by the first node.

As an embodiment, the "first configured uplink grant is associated with the first cell" includes: the first configured uplink grant is configured for the first cell.

As an embodiment, the "first configured uplink grant is associated with the first cell" includes: the first configured uplink grant is configured in the first cell.

As an embodiment, the "first configured uplink grant is associated with the first cell" includes: the first configured uplink grant is configured in an uplink carrier of the first cell.

As an embodiment, the "first configured uplink grant is associated with the first cell" includes: the first configured uplink grant is configured in a SUL (Supplementary Uplink) carrier or a NUL (Normal Uplink) carrier of the first cell.

As an embodiment, the "first configured uplink grant is associated with the first cell" includes: at least one SSB (Synchronization Signal Block) associated with the first configuration uplink grant belongs to the first cell.

As an embodiment, the second message is sent according to the first configured uplink grant.

As an embodiment, the "second message is sent according to the first configured uplink grant" includes: the MAC PDU to which the MAC SDU corresponding to the second message belongs is sent according to the first configured uplink grant.

As an embodiment, the "second message is sent according to the first configured uplink grant" includes: the second message is sent on the uplink resources of the first configured uplink grant.

As an embodiment, the "second message is sent according to the first configured uplink grant" includes: the first configured uplink grant is used to carry the second message.

As an embodiment, whether the second message is sent according to the first configuration uplink grant or is sent in the second random access process is related to at least one of SS-RSRP or RSRP change or the first timer.

As an embodiment, if the SS-RSRP of at least one SSB associated with the first configured uplink grant is higher than a first threshold, and the stored downlink reference RSRP value and the current downlink reference RSRP value are both valid, and the current downlink reference RSRP value does not increase or decrease by more than a second threshold compared to the stored downlink reference RSRP value, and the first timer is running, the second message is sent according to the first configured uplink grant.

As an embodiment, if the stored downlink reference RSRP value is invalid, or the current downlink reference RSRP value is invalid, the second message is sent in the second random access process.

As an embodiment, if the current downlink reference RSRP value increases or decreases by more than cg-SDT-RSRP-ChangeThreshold compared to the stored downlink reference RSRP value, the second message is sent in the second random access process.

As an embodiment, if the SS-RSRP of at least one SSB associated with the first configured uplink grant is higher than cg-SDT-RSRP-ThresholdSSB, the second message is sent in the second random access process.

As an embodiment, the first threshold is cg-SDT-RSRP-ThresholdSSB.

As an embodiment, the name of the first threshold includes at least one of cg or SDT or RSRP or Threshold or SSB.

As an embodiment, the second threshold is cg-SDT-RSRP-ChangeThreshold.

As an embodiment, the name of the second threshold includes at least one of cg or SDT or RSRP or Change or Threshold.

As an embodiment, the second message is sent during the second random access process.

As a sub-embodiment of this embodiment, each random access preamble in the second random access process is not used to indicate SDT.

As a sub-embodiment of this embodiment, each random access preamble in the second random access process is used to indicate SDT.

As a sub-embodiment of this embodiment, at least one random access preamble in the second random access process is used to indicate SDT.

As a sub-embodiment of this embodiment, the "second message is sent in the second random access process" includes: the MAC PDU to which the MAC SDU corresponding to the second message belongs is sent in the second random access process.

As a sub-embodiment of this embodiment, the "second message is sent in the second random access process" includes: the second message is sent in Msg 3 in the second random access process.

As a sub-embodiment of this embodiment, the "second message is sent in the second random access process" includes: the second message is sent in MsgA in the second random access process.

As an embodiment, if the first target signaling is used to determine that contention resolution for the first random access process is successfully completed, and the second message is sent in the second random access process, the first random access process and the second random access process are not the same random access process.

As a sub-embodiment of this embodiment, the second random access process is performed before the first random access process.

As a sub-embodiment of this embodiment, when the first random access process is initiated, the second random access process has been successfully completed.

As a sub-embodiment of this embodiment, when the first random access process is initiated, PREAMBLE_TRANSMISSION_COUNTER is initialized to 1.

As a sub-embodiment of this embodiment, when the first random access process is initiated, PREAMBLE_POWER_RAMPING_COUNTER is initialized to 1.

As a sub-embodiment of this embodiment, when the first random access process is initiated, the Msg3 buffer and the MSGA buffer are cleared.

As a sub-embodiment of this embodiment, when the second random access process is initiated, PREAMBLE_TRANSMISSION_COUNTER is initialized to 1.

As a sub-embodiment of this embodiment, when the second random access process is initiated, PREAMBLE_POWER_RAMPING_COUNTER is initialized to 1.

As a sub-embodiment of this embodiment, when the second random access process is initiated, the Msg3 buffer and the MSGA buffer are cleared.

As an embodiment, the first target signaling is a MAC CE including at least a timing advance command; and the second message is sent according to the first configured uplink grant.

As an embodiment, the first target signaling is a MAC CE including at least a timing advance command; and the second message is sent during the second random access process.

As an embodiment, the first target signaling is used to determine that contention resolution for the first random access process is successfully completed; and the second message is sent according to the first configured uplink grant.

As an embodiment, the first target signaling is used to determine that contention resolution for the first random access process is successfully completed; the second message is sent in the second random access process; the first random access process and the second random access process are not the same random access process.

As an embodiment, the second message is sent within a time interval between when the first target signaling is received, and the first node has no uplink data or uplink signaling to be processed.

As an embodiment, the second random access process is initiated.

As an embodiment, the second random access process is not initiated.

As an embodiment, in response to the second target signaling being received, the first timer is considered expired.

As an embodiment, in response to the second target signaling being received, the first timer is not considered expired.

As an embodiment, the second target signaling is received and is not used to determine that the first timer is considered expired.

### Embodiment 2

Embodiment 2 illustrates a schematic diagram of a network architecture according to an embodiment of the present application, as shown in FIG. 2. FIG. 2 illustrates a network architecture 200 of a 5G NR (New Radio)/ LTE (Long-Term Evolution) / LTE-A (Long-Term Evolution Advanced) system. The 5G NR / LTE/LTE-A network architecture 200 may be referred to as a 5GS (5G System)/ EPS (Evolved Packet System) 200 or some other suitable term. The 5GS /EPS 200 includes at least one of a UE (User Equipment) 201, a RAN (Radio Access Network) 202, a 5GC (5G Core Network)/EPC (Evolved Packet Core) 210, an HSS (Home Subscriber Server)/UDM (Unified Data Management) 220, and an Internet service 230. 5GS /EPS can be interconnected with other access networks, but these entities/interfaces are not shown for simplicity. As shown, 5GS /EPS provides packet switching services, but it will be readily understood by those skilled in the art that the various concepts presented throughout this application can be extended to networks or other cellular networks that provide circuit switching services. RAN includes node 203 and other nodes 204. Node 203 provides user and control plane protocol termination towards UE201. Node 203 can be connected to other nodes 204 via an Xn interface (e.g., backhaul)/X2 interface. Node 203 may also be referred to as a base station, a base transceiver station, a radio base station, a radio transceiver, a transceiver function, a basic service set (BSS), an extended service set (ESS), a TRP (transmitting and receiving node) or some other suitable terminology. Node 203 provides an access point to 5GC / EPC210 for UE201. Embodiments of UE 201 include cellular phones, smart phones, session initiation protocol (SIP) phones, laptop computers, personal digital assistants (PDAs), satellite radios, non-terrestrial base station communications, satellite mobile communications, global positioning systems, multimedia devices, video devices, digital audio players (e.g., MP3 players), cameras, game consoles, drones, aircraft, narrowband Internet of Things devices, machine type communication devices, land vehicles, cars, wearable devices, or any other similar functional devices. Those skilled in the art may also refer to UE 201 as a mobile station, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable term. Node 203 is connected to 5GC / EPC 210 via an S1/NG interface. 5GC / EPC210 includes MME (Mobility Management Entity)/AMF (Authentication Management Field)/SMF (Session Management Function) 211, other MME/AMF/ SMF 214, S-GW (Service Gateway) / UPF (User Plane Function) 212, and P-GW (Packet Data Network Gateway) / UPF213. MME/AMF/ SMF211 is the control node that handles the signaling between UE201 and 5GC / EPC210. In general, MME/AMF/ SMF211 provides bearer and connection management. All user IP (Internet Protocol) packets are transmitted through S-GW/UPF212, which itself is connected to P-GW / UPF213. P-GW provides UE IP address allocation and other functions. P-GW/UPF 213 is connected to Internet service 230. Internet service 230 includes operator-specific Internet protocol services, which may specifically include Internet, Intranet, IMS (IP Multimedia Subsystem) and packet-switched streaming services.

As an embodiment, the UE201 corresponds to the first node in the present application.

As an embodiment, the UE201 is a piece of user equipment (User Equipment, UE).

As an embodiment, the node 203 corresponds to the second node in the present application.

As an embodiment, the node 203 is a base station (BS).

As an embodiment, the node 203 is a piece of user equipment.

As an embodiment, the node 203 is a relay.

As an embodiment, the node 203 is a gateway.

As an embodiment, the node 204 corresponds to the third node in the present application.

As an embodiment, the node 204 is a base station device.

As an embodiment, the node 204 is a piece of user equipment.

As an embodiment, the node 204 is a relay.

As an embodiment, the node 204 is a gateway.

As an embodiment, the node 203 and the node 204 are connected via an ideal backhaul.

As an embodiment, the node 203 and the node 204 are connected via a non-ideal backhaul.

As an embodiment, the node 203 and the node 204 provide wireless resources for the UE 201 at the same time.

As an embodiment, the node 203 and the node 204 do not provide wireless resources for the UE 201 at the same time.

As an embodiment, the node 203 and the node 204 are the same node.

As an embodiment, the node 203 and the node 204 are two different nodes.

As an embodiment, the node 203 and the node 204 are of the same type.

As an embodiment, the node 203 and the node 204 are of different types.

As an embodiment, the user equipment supports transmission of a terrestrial network (Non-Terrestrial Network, NTN).

As an embodiment, the user equipment supports transmission of a non-terrestrial network (Terrestrial Network).

As an embodiment, the user equipment supports transmission in a network with a large delay difference.

As an embodiment, the user equipment supports dual connection (Dual Connection, DC) transmission.

As an embodiment, the user equipment includes an aircraft.

As an embodiment, the user equipment includes a vehicle-mounted terminal.

As an embodiment, the user equipment includes a vessel.

As an embodiment, the user equipment includes an Internet of Things terminal.

As an embodiment, the user equipment includes a terminal of the industrial Internet of Things.

As an embodiment, the user equipment includes a device supporting low-latency and high-reliability transmission.

As an embodiment, the user equipment includes a test device.

As an embodiment, the user equipment includes a signaling tester.

As an embodiment, the base station device includes a base transceiver station (Base Transceiver Station, BTS).

As an embodiment, the base station device includes a Node B (NodeB, NB).

As an embodiment, the base station device includes a gNB.

As an embodiment, the base station device includes an eNB.

As an embodiment, the base station device includes ng-eNB.

As an embodiment, the base station device includes en-g NB.

As an embodiment, the base station device supports transmission in a non-terrestrial network.

As an embodiment, the base station device supports transmission in a network with a large delay difference.

As an embodiment, the base station device supports transmission of a terrestrial network.

As an embodiment, the base station device includes a macrocellular (MarcoCellular) base station.

As an embodiment, the base station device includes a micro cell (Micro Cell) base station.

As an embodiment, the base station device includes a picocell (Pico Cell) base station.

As an embodiment, the base station device includes a home base station (Femtocell).

As an embodiment, the base station device includes a base station device that supports a large delay difference.

As an embodiment, the base station device includes a flying platform device.

As an embodiment, the base station device includes a satellite device.

As an embodiment, the base station device includes a TRP (Transmitter Receiver Point).

As an embodiment, the base station device includes a CU (Centralized Unit).

As an embodiment, the base station device includes a DU (Distributed Unit).

As an embodiment, the base station device includes a testing device.

As an embodiment, the base station equipment includes a signaling tester.

As an embodiment, the base station device includes an IAB (Integrated Access and Backhaul)-node.

As an embodiment, the base station device includes an IAB-donor.

As an embodiment, the base station device includes an IAB-donor-CU.

As an embodiment, the base station device includes an IAB-donor-DU.

As an embodiment, the base station device includes an IAB-DU.

As an embodiment, the base station device includes IAB-MT.

As an embodiment, the relay includes a relay.

As an embodiment, the relay includes L3 relay.

As an embodiment, the relay includes L2 relay.

As an embodiment, the relay includes a router.

As an embodiment, the relay includes a switch.

As an embodiment, the relay includes a piece of user equipment.

As an embodiment, the relay includes a base station device.

### Embodiment 3

Embodiment 3 shows a schematic diagram of an embodiment of a wireless protocol architecture for a user plane and a control plane according to the present application, as shown in FIG. 3. FIG. 3 is a schematic diagram illustrating an embodiment of a radio protocol architecture for a user plane 350 and a control plane 300, and FIG. 3 shows the radio protocol architecture for the control plane 300 in three layers: layer 1, layer 2, and layer 3. Layer 1 (L1 layer) is the lowest layer and implements various PHY (physical layer) signal processing functions. The L1 layer will be referred to as PHY301 herein. Layer 2 (L2 layer) 305 is above PHY301 and includes a MAC (Medium Access Control) sublayer 302, an RLC (Radio Link Control) sublayer 303, and a PDCP (Packet Data Convergence Protocol) sublayer 304. The PDCP sublayer 304 provides multiplexing between different radio bearers and logical channels. The PDCP sublayer 304 also provides security by encrypting data packets, and provides inter-zone mobility support. The RLC sublayer 303 provides segmentation and reassembly of upper layer data packets, retransmission of lost data packets, and reordering of data packets to compensate for out-of-order reception due to HARQ (Hybrid Automatic Repeat Request). The MAC sublayer 302 provides multiplexing between logical and transport channels. The MAC sublayer 302 is also responsible for allocating various radio resources (e.g., resource blocks) in a cell. The MAC sublayer 302 is also responsible for HARQ operations. The RRC (Radio Resource Control) sublayer 306 in Layer 3 (L3 layer) in the control plane 300 is responsible for obtaining radio resources (i.e., radio bearers) and configuring the lower layers using RRC signaling. The radio protocol architecture of the user plane 350 includes layer 1 (L1 layer) and layer 2 (L2 layer). In the user plane 350, the radio protocol architecture is substantially the same as the corresponding layers and sublayers in the control plane 300 for the physical layer 351, the PDCP sublayer 354 in the L2 layer 355, the RLC sublayer 353 in the L2 layer 355, and the MAC sublayer 352 in the L2 layer 355, but the PDCP sublayer 354 also provides header compression for upper layer data packets to reduce radio transmission overhead. The L2 layer 355 in the user plane 350 also includes a SDAP (Service Data Adaptation Protocol) sublayer 356, which is responsible for mapping between QoS flows and data radio bearers (DRBs) to support the diversity of services.

As an embodiment, the wireless protocol architecture in FIG. 3 is applicable to the first node in the present application.

As an embodiment, the wireless protocol architecture in FIG. 3 is applicable to the second node in the present application.

As an embodiment, the first signal in the present application is generated by the PHY301 or PHY351.

As an embodiment, the second signal in the present application is generated by the PHY301 or PHY351.

As an embodiment, the third signal in the present application is generated by the RRC306.

As an embodiment, the third signal in the present application is generated by the MAC302 or MAC352.

As an embodiment, the third signal in the present application is generated by the PHY301 or PHY351.

As an embodiment, the fourth signal in the present application is generated by the RRC306.

As an embodiment, the fourth signal in the present application is generated by the MAC302 or MAC352.

As an embodiment, the fourth signal in the present application is generated by the PHY301 or PHY351.

As an embodiment, the fifth signal in the present application is generated by the RRC306.

As an embodiment, the fifth signal in the present application is generated by the MAC302 or MAC352.

As an embodiment, the fifth signal in the present application is generated by the PHY301 or PHY351.

As an embodiment, the first signaling in the present application is generated in the RRC306.

As an embodiment, the first signaling in the present application is generated by the MAC302 or MAC352.

As an embodiment, the first signaling in the present application is generated in the PHY301 or PHY351.

### Embodiment 4

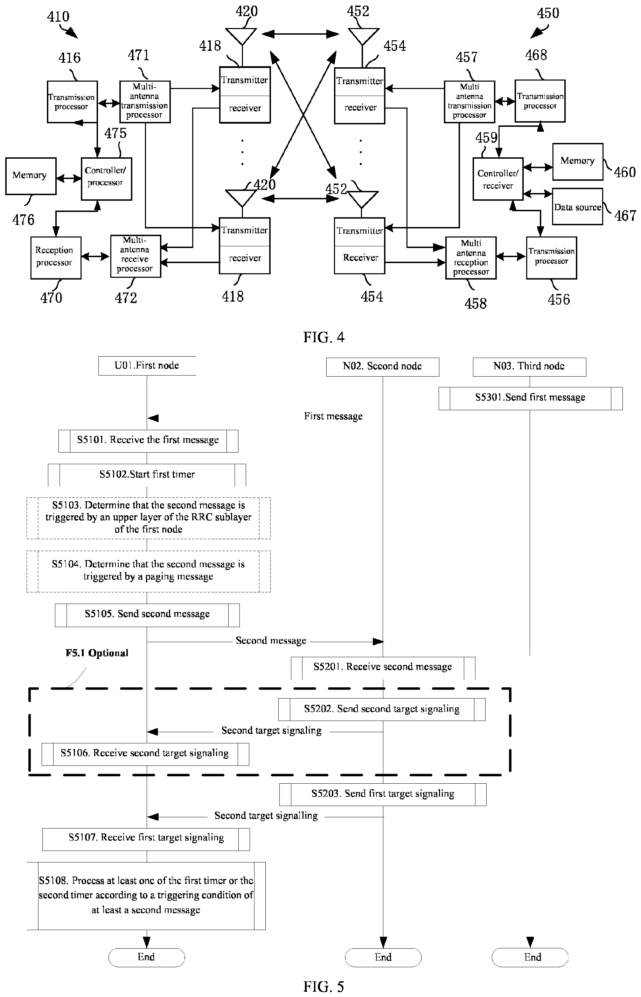

Embodiment 4 shows a schematic diagram of a first communication device and a second communication device according to the present application, as shown in Figure 4. Figure 4 is a block diagram of a first communication device 450 and a second communication device 410 communicating with each other in an access network.

The first communication device 450 includes a controller/processor 459, a memory 460, a data source 467, a transmission processor 468, a reception processor 456, a multi-antenna transmission processor 457, a multi-antenna reception processor 458, a transmitter/receiver 454 and an antenna 452.

The second communication device 410 includes a controller/processor 475, a memory 476, a reception processor 470, a transmission processor 416, a multi-antenna reception processor 472, a multi-antenna transmission processor 471, a transmitter/receiver 418 and an antenna 420.

In transmission from the second communication device 410 to the first communication device 450, at the second communication device 410, upper layer data packets from the core network are provided to the controller/processor 475. The controller/processor 475 implements the functionality of the L2 layer. In transmission from the second communication device 410 to the first communication device 450, the controller/processor 475 provides header compression, encryption, packet segmentation and reordering, multiplexing between logical and transport channels, and radio resource allocation to the first communication device 450 based on various priority metrics. The controller/processor 475 is also responsible for retransmission of lost packets and signaling to the first communication device 450. The transmission processor 416 and the multi-antenna transmission processor 471 implement various signal processing functions for the L1 layer (i.e., the physical layer). The transmission processor 416 implements coding and interleaving to facilitate forward error correction (FEC) at the second communication device 410, as well as mapping of signal constellations based on various modulation schemes (e.g., binary phase shift keying (BPSK), quadrature phase shift keying (QPSK), M-phase shift keying (M-PSK), M-quadrature amplitude modulation (M-QAM)). The multi-antenna transmission processor 471 performs digital spatial precoding, including codebook-based precoding and non-codebook-based precoding, and beamforming processing on the coded and modulated symbols to generate one or more spatial streams. The transmission processor 416 then maps each spatial stream to a subcarrier, multiplexes it with a reference signal (e.g., a pilot) in the time domain and/or frequency domain, and then uses an inverse fast Fourier transform (IFFT) to generate a physical channel carrying a time-domain multi-carrier symbol stream. The multi-antenna transmission processor 471 then performs a transmit analog precoding/beamforming operation on the time-domain multi-carrier symbol stream. Each transmitter 418 converts the baseband multi-carrier symbol stream provided by the multi-antenna transmission processor 471 into a radio frequency stream, and then provides it to a different antenna 420.

In the transmission from the second communication device 410 to the first communication device 450, at the first communication device 450, each receiver 454 receives a signal through its corresponding antenna 452. Each receiver 454 recovers the information modulated onto the RF carrier and converts the RF stream into a baseband multi-carrier symbol stream and provides it to the receiving processor 456. The receiving processor 456 and the multi-antenna receiving processor 458 implement various signal processing functions of the L1 layer. The multi-antenna receiving processor 458 performs a receiving analog precoding/beamforming operation on the baseband multi-carrier symbol stream from the receiver 454. The receiving processor 456 uses a fast Fourier transform (FFT) to convert the baseband multi-carrier symbol stream after the receiving analog precoding/beamforming operation from the time domain to the frequency domain. In the frequency domain, the physical layer data signal and the reference signal are demultiplexed by the receiving processor 456, wherein the reference signal will be used for channel estimation, and the data signal is recovered after multi-antenna detection in the multi-antenna receiving processor 458 to any spatial stream destined for the first communication device 450. The symbols on each spatial stream are demodulated and recovered in the reception processor 456, and soft decisions are generated. The reception processor 456 then decodes and deinterleaves the soft decisions to recover the upper layer data and control signals transmitted by the second communication device 410 on the physical channel. The upper layer data and control signals are then provided to the controller/processor 459. The controller/processor 459 implements the functions of the L2 layer. The controller/processor 459 may be associated with a memory 460 that stores program codes and data. The memory 460 may be referred to as a computer-readable medium. In the transmission from the second communication device 410 to the second communication device 450, the controller/processor 459 provides multiplexing between transport and logical channels, packet reassembly, decryption, header decompression, control signal processing to recover the upper layer data packets from the core network. The upper layer data packets are then provided to all protocol layers above the L2 layer. Various control signals may also be provided to the L3 for L3 processing.

In the transmission from the first communication device 450 to the second communication device 410, at the first communication device 450, a data source 467 is used to provide upper layer data packets to the controller/processor 459. The data source 467 represents all protocol layers above the L2 layer. Similar to the transmission function at the second communication device 410 described in the transmission from the second communication device 410 to the first communication device 450, the controller/processor 459 implements header compression, encryption, packet segmentation and reordering, and multiplexing between logical and transport channels based on radio resource allocation, and implements L2 layer functions for user plane and control plane. The controller/processor 459 is also responsible for the retransmission of lost packets and signaling to the second communication device 410. The transmission processor 468 performs modulation mapping and channel coding processing, and the multi-antenna transmission processor 457 performs digital multi-antenna spatial precoding, including codebook-based precoding and non-codebook-based precoding, and beamforming processing. Then, the transmission processor 468 modulates the generated spatial stream into a multi-carrier/single-carrier symbol stream, which is then provided to different antennas 452 via the transmitter 454 after analog precoding/beamforming operations in the multi-antenna transmission processor 457. Each transmitter 454 first converts the baseband symbol stream provided by the multi-antenna transmission processor 457 into a radio frequency symbol stream, and then provides it to the antenna 452.

In the transmission from the first communication device 450 to the second communication device 410, the functions at the second communication device 410 are similar to the reception functions at the first communication device 450 described in the transmission from the second communication device 410 to the first communication device 450. Each receiver 418 receives a radio frequency signal through its corresponding antenna 420, converts the received radio frequency signal into a baseband signal, and provides the baseband signal to the multi-antenna reception processor 472 and the reception processor 470. The reception processor 470 and the multi-antenna reception processor 472 jointly implement the functions of the L1 layer. The controller/processor 475 implements the L2 layer functions. The controller/processor 475 can be associated with a memory 476 that stores program codes and data. The memory 476 can be referred to as a computer-readable medium. In the transmission from the first communication device 450 to the second communication device 410, the controller/processor 475 provides demultiplexing between transport and logical channels, packet reassembly, decryption, header decompression, control signal processing to recover the upper layer data packets from the UE 450. Upper layer packets from the controller/processor 475 may be provided to the core network.

As an embodiment, the first communication device 450 includes: at least one processor and at least one memory, the at least one memory including computer program code; the at least one memory and the computer program code are configured to be used together with the at least one processor, and the first communication device 450 at least: receives a first message, the first message is an RRC message, the first message includes at least one of the time domain allocation information of the first configuration uplink grant or the frequency domain allocation information of the first configuration uplink grant; as a response to the first message being received, starts a first timer; sends a second message, the second message is used to request data transmission in the RRC inactive state; after the second message is sent, receives a first target signaling; as a response to the first target signaling being received, according to at least the trigger of the second message Conditionally process at least one of the first timer or the second timer; wherein the first timer is used to determine whether the uplink transmission for the first configured uplink grant is aligned; the second timer is used to determine whether the uplink transmission for the first cell is aligned; the first configured uplink grant is associated with the first cell; the first target signaling is used to determine that the second message is successfully received, or the first target signaling is a MAC CE including at least a timing advance command, or the first target signaling is used to determine that contention resolution for a first random access process is successfully completed; the second message is sent according to the first configured uplink grant, or the second message is sent in a second random access process; the first random access process and the second random access process are not the same random access process.

As an embodiment, the first communication device 450 includes: a memory storing a computer-readable instruction program, wherein the computer-readable instruction program generates an action when executed by at least one processor, wherein the action includes: receiving a first message, wherein the first message is an RRC message, wherein the first message includes at least one of time domain allocation information of a first configuration uplink grant or frequency domain allocation information of the first configuration uplink grant; starting a first timer as a response to the first message being received; sending a second message, wherein the second message is used to request data transmission in the RRC inactive state; after the second message is sent, receiving a first target signaling; and processing the first timer or the second timer according to a triggering condition of at least the second message as a response to the first target signaling being received. at least one of the timers; wherein the first timer is used to determine whether the uplink transmission for the first configured uplink grant is aligned; the second timer is used to determine whether the uplink transmission for the first cell is aligned; the first configured uplink grant is associated with the first cell; the first target signaling is used to determine that the second message is successfully received, or the first target signaling is a MAC CE including at least a timing advance command, or the first target signaling is used to determine that contention resolution for a first random access process is successfully completed; the second message is sent according to the first configured uplink grant, or the second message is sent in a second random access process; the first random access process and the second random access process are not the same random access process.

As an embodiment, the second communication device 410 includes: at least one processor and at least one memory, the at least one memory including computer program code; the at least one memory and the computer program code are configured to be used together with the at least one processor. The second communication device 410 at least: sends a first message, the first message is an RRC message, the first message includes at least one of the time domain allocation information of the first configuration uplink grant or the frequency domain allocation information of the first configuration uplink grant; receives a second message, the second message is used to request data transmission in the RRC inactive state; after the second message is received, sends a first target signaling; wherein, as a response to the first message being received, the recipient of the first message starts a first timer; as a response to the first target signaling being received, the recipient of the first message processes at least one of the first timer or the second timer according to the triggering condition of at least the second message; the first timer is used to determine the uplink transmission for the first configuration uplink grant. The first target signaling is used to determine whether the second message is successfully received, or the first target signaling is a MAC CE including at least a timing advance command, or the first target signaling is used to determine that contention resolution for a first random access process is successfully completed; the second message is sent according to the first configured uplink grant, or the second message is sent in a second random access process; the first random access process and the second random access process are not the same random access process; the sender of the second message is the receiver of the first message; the receiver of the first target signaling is the receiver of the first message.

As an embodiment, the second communication device 410 includes: a memory storing a computer-readable instruction program, wherein the computer-readable instruction program generates an action when executed by at least one processor, and the action includes: sending a first message, wherein the first message is an RRC message, and the first message includes at least one of the time domain allocation information of the first configuration uplink grant or the frequency domain allocation information of the first configuration uplink grant; receiving a second message, wherein the second message is used to request data transmission in the RRC inactive state; after the second message is received, sending a first target signaling; wherein, as a response to the first message being received, the recipient of the first message starts a first timer; as a response to the first target signaling being received, the recipient of the first message processes at least one of the first timer or the second timer according to the triggering condition of at least the second message; The first timer is used to determine whether the uplink transmission for the first configured uplink grant is aligned; the second timer is used to determine whether the uplink transmission for the first cell is aligned; the first configured uplink grant is associated with the first cell; the first target signaling is used to determine that the second message is successfully received, or the first target signaling is a MAC CE including at least a timing advance command, or the first target signaling is used to determine that contention resolution for a first random access process is successfully completed; the second message is sent according to the first configured uplink grant, or the second message is sent in a second random access process; the first random access process and the second random access process are not the same random access process; the sender of the second message is the receiver of the first message; the receiver of the first target signaling is the receiver of the first message.

As an embodiment, the antenna 452, the receiver 454, the receiving processor 456, and the controller/processor 459 are used to receive a first message.

As an embodiment, at least one of the antenna 420, the transmitter 418, the transmission processor 416, and the controller/processor 475 is used to send a first message.

As an embodiment, the antenna 452, the receiver 454, the receiving processor 456, and the controller/processor 459 are used to receive second target signaling.

As an embodiment, at least one of the antenna 420, the transmitter 418, the transmission processor 416, and the controller/processor 475 is used to send the second target signaling.

As an embodiment, the antenna 452, the transmitter 454, the transmission processor 468, and the controller/processor 459 are used to send a second message.

As an embodiment, at least one of the antenna 420, the receiver 418, the receiving processor 470, and the controller/processor 475 is used to receive a second message.

As an embodiment, the antenna 452, the transmitter 454, the transmission processor 468, and the controller/processor 459 are used to send a first target signaling.

As an embodiment, at least one of the antenna 420, the receiver 418, the receiving processor 470, and the controller/processor 475 is used to receive a first target signaling.

As an embodiment, the first communication device 450 corresponds to the first node in this application.

As an embodiment, the second communication device 410 corresponds to the second node in this application.

As an embodiment, the first communication device 450 is a piece of user equipment.

As an embodiment, the first communication device 450 is a piece of user equipment supporting a large delay difference.

As an embodiment, the first communication device 450 is a piece of user equipment supporting NTN.

As an embodiment, the first communication device 450 is an aircraft device.

As an embodiment, the first communication device 450 has a positioning capability.

As an embodiment, the first communication device 450 does not have a fixed energy capability.

As an embodiment, the first communication device 450 is a piece of user equipment supporting TN.

As an embodiment, the second communication device 410 is a base station device (gNB/eNB /ng-eNB).

As an embodiment, the second communication device 410 is a base station device supporting a large delay difference.

As an embodiment, the second communication device 410 is a base station device supporting NTN.

As an embodiment, the second communication device 410 is a satellite device.

As an embodiment, the second communication device 410 is a flying platform device.

As an embodiment, the second communication device 410 is a base station device supporting TN.

### Embodiment 5

Embodiment 5 illustrates a wireless signal transmission flow chart according to an embodiment of the present application, as shown in FIG. 5. It is particularly noted that the sequence in this embodiment does not limit the signal transmission sequence and implementation sequence in the present application.

For **the first node U01,** in step S5101, a first message is received, the first message is an RRC message, and the first message includes at least one of time domain allocation information of a first configuration uplink grant or frequency domain allocation information of the first configuration uplink grant; in step S5102, as a response to the first message being received, a first timer is started; in step S5103, it is determined that a second message is triggered by an upper layer of the RRC sublayer of the first node U01; in step S5104, it is determined that the second message is triggered by a paging message; in step S5105, a second message is sent, and the second message is used to request data transmission in the RRC inactive state; in step S5106, as a response to the second message being sent, a second target signaling is received, and the second target signaling is used to determine that the second message is successfully received; in step S5107, after the second message is sent, the first target signaling is received; in step S5108, 8, as a response to the first target signaling being received, at least one of the first timer or the second timer is processed according to a triggering condition of at least the second message.

For the **second node N02,** in step S5201, the second message is received; in step S5202, the second target signaling is sent; in step S5203, the first target signaling is sent.

For **the third node N03,** in step S5301, the first message is sent.

In embodiment 5, the first timer is used to determine whether the uplink transmission for the first configured uplink grant is aligned; the second timer is used to determine whether the uplink transmission for the first cell is aligned; the first configured uplink grant is associated with the first cell; the first target signaling is used to determine that the second message is successfully received, or the first target signaling is a MAC CE including at least a timing advance command, or the first target signaling is used to determine that contention resolution for a first random access process is successfully completed; the second message is sent according to the first configured uplink grant, or the second message is sent in a second random access process; the first random access process and the second random access process are not the same random access process.

As an embodiment, the first node U01 is a piece of user equipment.

As an embodiment, the first node U01 is a base station device.

As an embodiment, the first node U01 is a relay device.

As an embodiment, the second node N02 is a base station device.

As an embodiment, the second node N02 is a piece of user equipment.

As an embodiment, the second node N02 is a relay device.

As an embodiment, the second node is a maintaining base station of the first cell.

As an embodiment, the third node N03 is a base station device.

As an embodiment, the third node N03 is a piece of user equipment.

As an embodiment, the third node N03 is a relay device.

Typically, the first node U01 is a piece of user equipment, the second node N02 is a gNB, and the third node N03 is a gNB.

As an embodiment, the third node N03 is the second node N02.

As an embodiment, the third node N03 is not the second node N02.

As an embodiment, if the second message is sent according to the first configured uplink grant, after the initial transmission of the CG-SDT, the first node U01 starts to monitor the PDCCH addressed to the C-RNTI and CS-RNTI.

As an embodiment, if the second message is sent in the second random access process, after the second random access process is successfully completed, the first node U01 starts to monitor the PDCCH addressed to the C-RNTI.

As an embodiment, if the second message is sent according to the first configured uplink grant, after the initial transmission of the CG-SDT, the first node U01 starts to monitor the PDCCH addressed to the C-RNTI and CS-RNTI until the CG-SDT process ends.

As an embodiment, if the second message is sent in the second random access process, after the second random access process is successfully completed, the first node U01 starts to monitor the PDCCH addressed to the C-RNTI until the RA-SDT process ends.

As an embodiment, step S5103 is optional.

As an embodiment, step S5103 exists.

As an embodiment, step S5103 does not exist.

As an embodiment, step S5104 is optional.

As an embodiment, step S5104 exists.

As an embodiment, step S5104 does not exist.

As an embodiment, the step S5103 and the step S5104 do not exist at the same time.

As an embodiment, the step S5103 exists, and the step S5104 does not exist.

As an embodiment, the step S5103 does not exist, and the step S5104 exists.

As an embodiment, the dashed box F5.1 is optional.

As an embodiment, the dashed box F5.1 exists.

As a sub-embodiment of this embodiment, the second target signaling is used to determine whether the second message is successfully received.

As a sub-embodiment of this embodiment, the first target signaling is a MAC CE including at least a timing advance command.

As a sub-embodiment of this embodiment, the first target signaling is used to determine that contention resolution for the first random access process is successfully completed.

As a sub-embodiment of this embodiment, if the second message is sent according to the first configured uplink grant, after the second target signaling is received, the first node U01 starts to monitor the PDCCH addressed to C-RNTI and CS-RNTI until the CG-SDT process ends.

As a sub-embodiment of this embodiment, if the second message is sent in the second random access process, after the second target signaling is received, the first node U01 starts to monitor the PDCCH addressed to the C-RNTI until the RA-SDT process ends.

As a sub-embodiment of this embodiment, the second target signaling is received in response to the second message being sent.

As a sub-embodiment of this embodiment, the second target signaling is a response to the first MAC PDU.

As a sub-embodiment of this embodiment, the second message is sent according to the first configured uplink grant.

As a dependent embodiment of this sub-embodiment, the second target signaling is used to determine that the initial transmission of the CG-SDT is successfully completed.

As a dependent embodiment of this sub-embodiment, the second target signaling is physical layer signaling.

As a dependent embodiment of this sub-embodiment, the second target signaling includes a DCI, and the second target signaling is scrambled by the C-RNTI of the first node U01 in the first cell.

As a dependent embodiment of this sub-embodiment, the second target signaling is transmitted on PDCCH.

As a dependent embodiment of this sub-embodiment, the second target signaling includes a MAC layer signaling.

As a dependent embodiment of this sub-embodiment, the second target signaling includes a MAC SDU.

As a dependent embodiment of this sub-embodiment, the second target signaling includes a MAC CE.

As a sub-embodiment of this embodiment, the second message is sent in the second random access process.

As a dependent embodiment of this sub-embodiment, the second target signaling includes a DCI, the DCI is addressed to the TEMPORARY _C-RNTI, and the message B-2 indicates the TEMPORARY_C-RNTI.

As a dependent embodiment of this sub-embodiment, the second target signaling includes a DCI, the DCI is addressed to the TEMPORARY _C-RNTI, and the message 2-2 indicates the TEMPORARY_C-RNTI.

As a dependent embodiment of this sub-embodiment, the second target signaling includes a DCI, the DCI is addressed to the MSGB-RNTI, and the PRACH opportunity for sending the random access preamble in the message A-2 is used to determine the MSGB-RNTI.

As a dependent embodiment of this sub-embodiment, the second target signaling includes a MAC SDU.

As a dependent embodiment of this sub-embodiment, the second target signaling includes a MAC CE.

As a dependent embodiment of this sub-embodiment, the second target signaling is used to determine that the second random access process is successfully completed.

As a dependent embodiment of this sub-embodiment, the second target signaling is used to determine that contention resolution for the second random access process is successfully completed.

As a dependent embodiment of this sub-embodiment, the second target signaling is the message B-2, and the message B-2 includes successRAR MAC subPDU.

The UE Contention Resolution Identity in the successRAR MAC subPDU included in the second target signaling matches the MAC SDU corresponding to the second message.

As a dependent embodiment of this sub-embodiment, the second target signaling is the message 4-2, and the message 4-2 includes UE Contention Resolution Identity MAC CE.

The UE Contention Resolution Identity in the UE Contention Resolution Identity MAC CE included in the second target signaling matches the MAC SDU corresponding to the second message.

As an embodiment, the dotted box F5.1 does not exist.

As a sub-embodiment of this embodiment, the first target signaling is used to determine whether the second message is successfully received.

As a sub-embodiment of this embodiment, if the second message is sent according to the first configured uplink grant, after the first target signaling is received, the first node U01 starts to monitor the PDCCH addressed to C-RNTI and CS-RNTI until the CG-SDT process ends.

As a sub-embodiment of this embodiment, if the second message is sent in the second random access process, after the first target signaling is received, the first node U01 starts to monitor the PDCCH addressed to the C-RNTI until the RA-SDT process ends.

### Embodiment 6

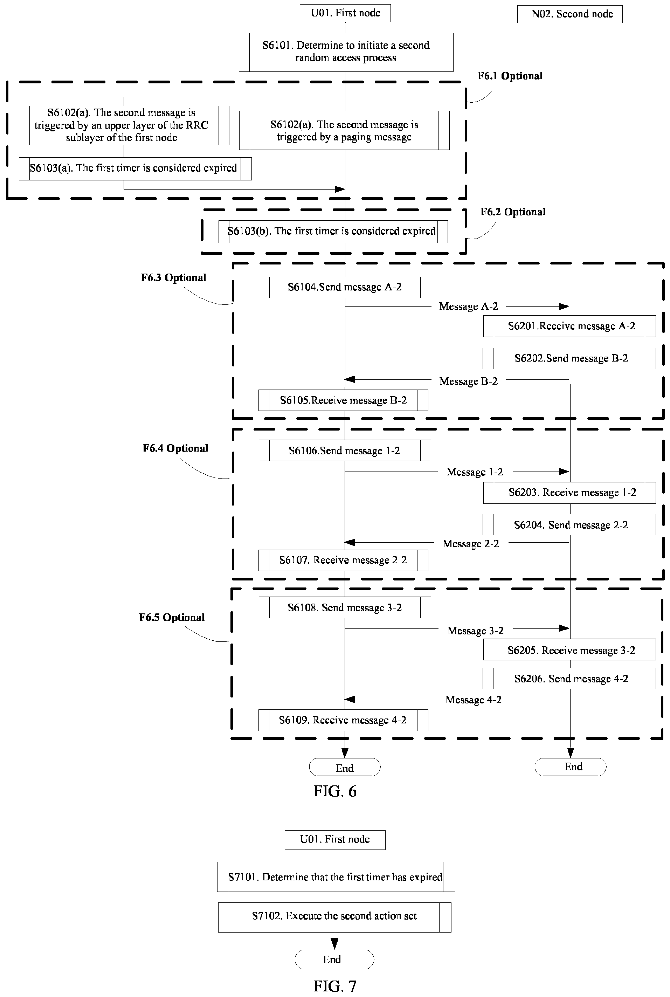

Embodiment 6 illustrates a wireless signal transmission flow chart according to another embodiment of the present application, as shown in FIG. 6. It is particularly noted that the sequence in this embodiment does not limit the signal transmission sequence and implementation sequence in the present application.

For **the first node U01,** in step S6101, it is determined to initiate a second random access process; in step S6102 (a), it is determined that the second message is triggered by an upper layer of the RRC sublayer of the first node U01; in step S6103 (a), it is considered that the first timer is expired; in step S6102 (b), the second message is triggered by a paging message; in step S6103 (b), it is considered that the first timer is expired; in step S6104, message A-2 is sent; in step S6105, message B-2 is received; in step S6106, message 1-2 is sent; in step S6107, message 2-2 is received; in step S6108, message 3-2 is sent; and in step S6109, message 4-2 is received.

For **the second node N02,** in step S6201, the message A-2 is received; in step S6202, the message B-2 is sent; in step S6203, the message 1-2 is received; in step S6204, the message 2-2 is sent; in step S6205, the message 3-2 is received; and in step S6206, the message 4-2 is sent.

In embodiment 6, the second message is sent in the second random access process.

As an embodiment, the second message is sent in the message A-2.

As an embodiment, the second message is sent in the message 3-2.

As an embodiment, the message A-2 is MSGA.

As an embodiment, the message 3-2 is Msg 3.

As an embodiment, the first target signaling is a MAC CE including at least a timing advance command.

As an embodiment, the first target signaling is used to determine that contention resolution for a first random access process is successfully completed; and the first random access process and the second random access process are not the same random access process.

As an embodiment, the "triggering condition of the second message" includes: the triggering condition of the SDT process.

As an embodiment, the "triggering condition of the second message" includes: the triggering condition of the RRC recovery process.

As an embodiment, the "second message is triggered by an upper layer of the RRC sublayer of the first node U01" includes: the second message is triggered by MO-SDT.

As an embodiment, the "second message is triggered by a paging message" includes: the second message is triggered by MT-SDT.

As an embodiment, if it is determined to initiate the second random access process, whether the expiration of the first timer is considered to be irrelevant to the triggering condition of at least the second message.

As an embodiment, if it is determined to initiate the second random access process, whether the expiration of the first timer is considered to be related to a triggering condition of at least the second message.

As an embodiment, the "second message is triggered by an upper layer of the RRC sublayer of the first node U01" includes at least: the upper layer of the RRC sublayer of the first node U01 requests to restore the RRC connection, and the amount of uplink data to be processed of all radio bearers in the first radio bearer set is less than or equal to sdt-DataVolumeThreshold, and the RSRP referenced by the downlink path loss is higher than sdt-RSRP-Threshold.

As an embodiment, the "second message is triggered by an upper layer of the RRC sublayer of the first node U01" includes: the second message is triggered by MO-SDT.

As an embodiment, the "second message is triggered by a paging message" includes at least: receiving the paging message, and the paging message instructs the first node U01 to transmit data in the RRC inactive state.

As an embodiment, the "second message is triggered by a paging message" includes: the second message is triggered by MT_SDT.

As an embodiment, when the first timer is running, if the first timer is not considered expired, the first timer continues to run.

As an embodiment, when the first timer is running, if the first timer is considered expired, the first timer no longer continues to run.

As an embodiment, the expiration of the first timer includes: the first timer is equal to 0; the first timer counts down.

As an embodiment, the expiration of the first timer includes: the first timer is equal to the maximum value of the first timer; and the first timer is counting up.

As an embodiment, the expiration of the first timer includes: the first timer is considered expired.

As an embodiment, when the first timer is considered expired, the first timer is greater than 0, and the first timer is less than the maximum value of the first timer.

As an embodiment, when the first timer is stopped, it is considered that the first timer has expired.

As an embodiment, when a first set of conditions is met, the second message is triggered by an upper layer of the RRC sublayer of the first node U01; the first set of conditions includes at least the upper layer of the RRC sublayer of the first node U01 requesting to restore the RRC connection.

As an embodiment, the first condition set includes: the data volume of uplink data to be processed of all radio bearers in the first radio bearer set is less than or equal to sdt-DataVolumeThreshold.

As an embodiment, the first condition set includes: the RSRP of the downlink path loss reference is higher than sdt-RSRP-Threshold.

As an embodiment, the first condition set includes: CG-SDT is not configured on the selected uplink carrier or the TA configured with grant type 1 resources is invalid or the SS-RSRP of each SSB configured for CG-SDT is not higher than cg-SDT-RSRP-ThresholdSSB.

As an embodiment, the first condition set includes: a group of random access resources indicating RA-SDT is available on the selected uplink carrier.

As an embodiment, the first condition set includes: the lower layer of the RRC sublayer of the first node U01 indicates to the RRC sublayer that the condition for initiating the SDT process is met.

As an embodiment, when a second set of conditions is met, the second message is triggered by the paging message; the second set of conditions includes at least receiving the paging message.

As an embodiment, the second condition set includes: the paging message instructs the first node U01 to perform data transmission in the RRC inactive state.

As an embodiment, the second condition set includes: the paging message includes the identifier of the first node U01.

As an embodiment, the second condition set includes: the paging message includes an indication for the first node U01 to perform data transmission in the RRC inactive state.

As an embodiment, the second condition set includes: the paging message is a Paging message.

As an embodiment, the second condition set includes: the paging message includes a first identifier.

As an embodiment, the second condition set includes: the value of the RRC field including PagingRecord in a name in the paging message is set to the first identifier.

As an embodiment, the second condition set includes: if the paging message includes a first identifier, and the first identifier matches the fullI-RNTI stored by the first node.

As an embodiment, the second condition set includes: if the paging message includes a first identifier, and the first identifier matches the fullI-RNTI stored by the first node, and the first identifier is instructed to perform data transmission in the RRC inactive state.

As an embodiment, the first identifier includes positive integer bits.

As an embodiment, the first identifier is a non-negative integer.

As an embodiment, the first identifier is a bit string.

As an embodiment, the first identifier occupies 40 bits.

As an embodiment, the first identifier is ue-Identity.

As an embodiment, the first identifier is PagingUE-Identity.

As an embodiment, the first identifier is fullI-RNTI.

As an embodiment, the first identifier is I-RNTI-Value.

As an embodiment, the dashed box F6.1 is optional.

As an embodiment, the dashed box F 6.1 exists.

As a sub-embodiment of this embodiment, as a response to determining to initiate the second random access process, whether the first timer is considered expired is determined according to the triggering condition of at least the second message; wherein the behavior of determining whether the first timer is considered expired according to the triggering condition of at least the second message includes: if the second message is triggered by an upper layer of the RRC sublayer of the first node U01, the first timer is considered expired; if the second message is triggered by a paging message, the first timer is not considered expired.

As an embodiment, the dotted box F6.1 does not exist.

As an embodiment, the dashed box F6.2 is optional.

As an embodiment, the dotted box F6.2 exists.

As a sub-embodiment of this embodiment, as a response to determining to initiate the second random access process, it is considered that the first timer has expired.

As a sub-embodiment of this embodiment, if the second random access process is initiated, it is considered that the first timer has expired.

As a sub-embodiment of this embodiment, as a response to determining to initiate the second random access process, regardless of whether the second message is triggered by an upper layer of the RRC sublayer of the first node U01 or by a paging message, the first timer is considered expired.

As an embodiment, the dotted box F6.2 does not exist.

As an embodiment, the dotted box F6.1 and the dotted box F6.2 do not exist at the same time.

As an embodiment, the dotted box F6.1 does not exist, and the dotted box F6.2 exists.

As an embodiment, the dotted box F6.1 exists, and the dotted box F6.2 does not exist.

As an embodiment, the dashed box F6.3 is optional.

As an embodiment, the dashed box F6.4 is optional.

As an embodiment, the dashed box F6.5 is optional.

As an embodiment, only one of the dotted box F6.3 and the dotted box F6.4 exists.

As an embodiment, the dotted box F6.4 and the dotted box F6.5 do not exist, and the dotted box F6.3 exists.

As a sub-embodiment of this embodiment, during the second random access process, a message A-2 is sent, wherein the message A-2 includes the MAC PDU to which the MAC SDU corresponding to the second message belongs; and as a response to the sending of the message A-2, a message B-2 is received.

As a sub-embodiment of this embodiment, the message B-2 is used to determine that the second random access process is successfully completed.

As a sub-embodiment of this embodiment, the message B-2 includes successRAR MAC subPDU.

As a sub-embodiment of this embodiment, the UE Contention Resolution Identity in the successRAR MAC subPDU included in the message B-2 matches the MAC SDU corresponding to the second message.

As an embodiment, the dotted box F6.3 and the dotted box F6.5 both exist, and the dotted box F6.4 does not exist.

As a sub-embodiment of this embodiment, during the second random access process, message A-2 is sent; as a response to the message A-2 being sent, message B-2 is received; as a response to the message B-2 being received, message 3-2 is sent, and the message 3-2 includes the MAC PDU to which the MAC SDU corresponding to the second message belongs; as a response to the message 3-2 being sent, message 4-2 is received.

As a sub-embodiment of this embodiment, the message B-2 includes fallbackRAR MAC subPDU.

As an embodiment, the dotted box F6.4 and the dotted box F6.5 both exist, and the dotted box F6.3 does not exist.

As a sub-embodiment of this embodiment, in the second random access process, message 1-2 is sent; as a response to the sending of the message 1-2, message 2-2 is received; as a response to the receiving of the message 2-2, message 3-2 is sent, and the message 3-2 includes the MAC PDU to which the MAC SDU corresponding to the second message belongs; as a response to the sending of the message 3-2, message 4-2 is received.

As an embodiment, the message 1-2 is a random access preamble.

As an embodiment, the messages 1-2 are not used to indicate SDT.

As an embodiment, the message 1-2 is used to indicate SDT .

As an embodiment, the message 2-2 is a MAC RAR, and the second message is sent according to the uplink grant indicated by the MAC RAR.

As an embodiment, the message 4-2 is used to determine that the second random access process is successfully completed.

As an embodiment, the message 4-2 includes UE Contention Resolution Identity MAC CE.

As an embodiment, the UE Contention Resolution Identity in the UE Contention Resolution Identity MAC CE included in the message 4-2 matches the MAC SDU corresponding to the second message.

As an embodiment, the message A-2 includes a MAC PDU to which the MAC SDU corresponding to the second message belongs and a random access preamble, and the second message is sent according to an uplink grant associated with the random access preamble.

As an embodiment, the random access preamble included in the message A-2 is not used to indicate SDT.

As an embodiment, the random access preamble included in the message A-2 is used to indicate SDT.

### Embodiment 7

Embodiment 7 illustrates a wireless signal transmission flow chart wherein the expiration of the first timer is used to determine the execution of the second action set according to an embodiment of the present application, as shown in FIG. 7.

For the **first node U01,** in step S7101, it is determined that the first timer has expired; in step S7102, in response to the expiration of the first timer, a second action set is executed.

In Embodiment 7, expiration of the first timer is used to determine execution of the second action set.

As an embodiment, when the first timer expires, the second timer is running.

As an embodiment, when the first timer expires, the second timer is not running.

As an embodiment, in response to expiration of the first timer, the second action set is performed only when the second timer is not running.

As an embodiment, in response to expiration of the first timer, the second action set is performed regardless of whether the second timer is running.

As an embodiment, the "determining that the first timer has expired" includes: considering that the first timer has expired.

As an embodiment, the "determining that the first timer expires" includes: the first timer counts down to 0.

As an embodiment, the "determining that the first timer has expired" includes: the first timer is timing to a maximum value of the first timer.

As an embodiment, "execute a second action set in response to expiration of the first timer" means: if the first timer expires, execute the second action set.

As an embodiment, "execute a second action set in response to expiration of the first timer" means: once the first timer expires, execute the second action set.

As an embodiment, the second action set includes clearing any configured uplink grants.

As a sub-embodiment of this embodiment, any uplink grant of the configuration includes the first configured uplink grant.

As a sub-embodiment of this embodiment, any uplink grant of the configuration is the first configured uplink grant.

As an embodiment, the second action set includes flushing all HARQ (Hybrid Automatic Repeat Request) buffers.

As an embodiment, the second action set includes maintaining the TAG to which the first cell belongs N_{TA}.

As an embodiment, the second action set includes clearing any configured uplink grants, including the first configured uplink grants, refreshing all HARQ buffers, and maintaining the TAG to which the first cell belongs N_{TA}.

As an embodiment, the second action set includes clearing any configured uplink grants, or refreshing all HARQ buffers, or maintaining N_{TA} at least one of the TAGs to which the first cell belongs.

As an embodiment, the N_{TA} definition refers to 3GPP TS 38.211.

### Embodiment 8

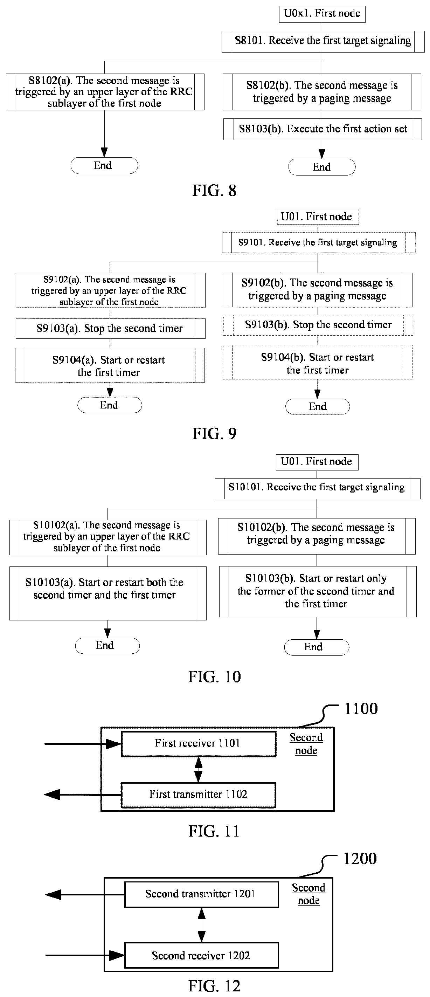

Embodiment 8 illustrates a wireless signal transmission flow chart for processing at least one of the first timer or the second timer according to the triggering condition of at least the second message according to an embodiment of the present application, as shown in FIG. 8. It is particularly noted that the order in this embodiment does not limit the signal transmission order and implementation order in the present application.

For **the first node U01,** in step S8101, a first target signaling is received, and as a response to the reception of the first target signaling, a triggering condition of the second message is determined; in step S8102 (a), it is determined that the second message is triggered by an upper layer of the RRC sublayer of the first node U01; in step S8102 (b), it is determined that the second message is triggered by a paging message; in step S8103 (b), a first action set is executed.

In embodiment 8, the behavior of processing at least one of the first timer or the second timer according to the triggering condition of at least the second message includes: if the second message is triggered by a paging message, executing a first action set; if the second message is triggered by an upper layer of the RRC sublayer of the first node U01, the first action set is not executed; the first action set includes stopping the first timer or starting the second timer or clearing at least one of the first configured uplink grant; the first target signaling is used to determine that the second message is successfully received.

As an embodiment, the first target signaling is received in response to the second message being sent.

As an embodiment, the first target signaling is a response to the first MAC PDU.

As an embodiment, the second message is sent according to the first configured uplink grant.

As an embodiment, the second message is sent during the second random access process.

As an embodiment, the first action set includes at least one of considering the first timer expired or starting the second timer or clearing the first configuration uplink grant.

As an embodiment, as a response to the first target signaling being received, if the second message is triggered by a paging message, the first action set is executed.

As an embodiment, as a response to the first target signaling being received, if the second message is triggered by an upper layer of the RRC sublayer of the first node U01, the first action set is not executed.

As an embodiment, if the second message is triggered by an upper layer of the RRC sublayer of the first node U01, the first target signaling is received without triggering the first action set.

As an embodiment, if the second message is triggered by a paging message, the first target signaling is received and used to trigger the first action set.

As an embodiment, in response to the first target signaling being received, if the second message is triggered by a paging message, the first timer is stopped.

As an embodiment, in response to stopping the first timer, the first timer is considered expired.

As an embodiment, in response to deeming that the first timer has expired, the first configuration uplink grant is cleared.

As an embodiment, in response to considering that the first timer has expired, the CG-SDT process that is still in progress is considered to be terminated.

As an embodiment, in response to considering that the first timer has expired, the CG-SDT process that is still in progress is not considered terminated.

As an embodiment, as a response to the first target signaling being received, if the second message is triggered by a paging message, it is considered that the ongoing CG-SDT process is terminated.

As an embodiment, as a response to the first target signaling being received, if the second message is triggered by a paging message, the CG-SDT process that is still in progress is not considered to be terminated.

As an embodiment, as a response to the first target signaling being received, if the second message is triggered by a paging message, the second timer is started.

As an embodiment, as a response to the first target signaling being received, if the second message is triggered by a paging message, the first configured uplink grant is cleared.

As an embodiment, the first action set includes stopping the first timer and clearing the first configuration uplink grant, and the first action set does not include starting the second timer.

As a sub-embodiment of this embodiment, in response to the first target signaling being received, if the second message is triggered by a paging message, the first timer is stopped and the first configured uplink grant is cleared.

As a sub-embodiment of this embodiment, in response to the first target signaling being received, if the second message is triggered by a paging message, the second timer is not started.

As a sub-embodiment of this embodiment, if the second message is triggered by a paging message, the first target signaling is not used to trigger the start of the second timer.

As an embodiment, the first action set is to stop the first timer.

As an embodiment, the first action set is to clear the first configured uplink grant.

As an embodiment, the first action set is to start the second timer.

As an embodiment, the first action set includes stopping the first timer, clearing the first configuration uplink grant, and starting the second timer.

As a sub-embodiment of this embodiment, as a response to the first target signaling being received, if the second message is triggered by a paging message, the first timer is stopped, the first configured uplink grant is cleared, and the second timer is started.

As an embodiment, the first action set includes starting the second timer, and the first action set does not include stopping the first timer and clearing the first configuration uplink grant.

As a sub-embodiment of this embodiment, in response to the first target signaling being received, if the second message is triggered by a paging message, the second timer is started.

As a sub-embodiment of this embodiment, in response to the first target signaling being received, if the second message is triggered by a paging message, the first timer is not stopped, and the first configured uplink grant is not cleared.

As a sub-embodiment of this embodiment, if the second message is triggered by a paging message, the first target signaling is not used to trigger stopping the first timer and clearing the first configuration uplink grant.

### Embodiment 9

Embodiment 9 illustrates a wireless signal transmission flow chart for processing at least one of the first timer or the second timer according to the triggering condition of at least the second message according to another embodiment of the present application, as shown in FIG. 9. It is particularly noted that the order in this embodiment does not limit the signal transmission order and implementation order in the present application.

For **the first node U01,** in step S9101, a first target signaling is received, and as a response to the reception of the first target signaling, a triggering condition of the second message is determined; in step S9102 (a), it is determined that the second message is triggered by an upper layer of the RRC sublayer of the first node U01; in step S9103 (a), the second timer is stopped; in step S9104 (a), the first timer is started or restarted; in step S9102 (b), it is determined that the second message is triggered by a paging message; in step S9103 (b), the second timer is stopped; in step S9104 (b), the first timer is started or restarted.

In embodiment 9, the behavior of processing at least one of the first timer or the second timer according to the triggering condition of at least the second message includes: if the second message is triggered by an upper layer of the RRC sublayer of the first node U01, stopping the second timer, and starting or restarting the first timer; if the second message is triggered by a paging message, at least one of the behaviors of "stopping the second timer, and starting or restarting the first timer" is not executed; the first target signaling is used to determine that contention resolution for the first random access process is successfully completed.

As an embodiment, in response to the first target signaling being received, contention resolution for the first random access process is considered to be successfully completed.

As an embodiment, when the first target signaling is received, contention resolution for the first random access process is considered to be successfully completed.

As an embodiment, the first timer is running when contention resolution for the first random access process is considered to be successfully completed.

As an embodiment, when contention resolution for the first random access process is considered successful, the CG-SDT process is still in progress.

As an embodiment, when the first target signaling is received, the first timer is running.

As an embodiment, when the first target signaling is received, the CG-SDT process is still ongoing.

As an embodiment, the "response received as the first target signaling" includes: when contention resolution for the first random access process is considered to be successfully completed.

As an embodiment, the "response received as the first target signaling" includes: if contention resolution for the first random access process is considered to be successfully completed.

As an embodiment, as a response to the first target signaling being received, if the second message is triggered by an upper layer of the RRC sublayer of the first node U01, the second timer is stopped, and the first timer is started or restarted.

As an embodiment, in response to the first target signaling being received, if the second message is triggered by a paging message, the second timer is stopped.

As a sub-embodiment of this embodiment, in response to the first target signaling being received, if the second message is triggered by a paging message, the first timer is not started and is not restarted.

As a sub-embodiment of this embodiment, if the second message is triggered by a paging message, the reception of the first target signaling does not trigger the start or restart of the first timer.

As an embodiment, as a response to the first target signaling being received, if the second message is triggered by a paging message, the first timer is started or restarted.

As a sub-embodiment of this embodiment, as a response to the first target signaling being received, if the second message is triggered by a paging message, the second timer is not stopped.

As a sub-embodiment of this embodiment, if the second message is triggered by a paging message, the reception of the first target signaling does not trigger stopping of the second timer.

As an embodiment, as a response to the first target signaling being received, if the second message is triggered by a paging message, the first timer is not started and is not restarted, and the second timer is not stopped.

As an embodiment, if the second message is triggered by a paging message, the reception of the first target signaling does not trigger the stopping of the second timer, and the reception of the first target signaling does not trigger the starting or restarting of the first timer.

As an embodiment, if the second message is triggered by a paging message, at least one of the actions "stop the second timer, and start or restart the first timer" is not executed, which means: if the second message is triggered by a paging message, the first target signaling is received and does not trigger at least one of "stop the second timer, and start or restart the first timer."

### Embodiment 10

Embodiment 10 illustrates a wireless signal transmission flow chart for processing at least one of the first timer or the second timer according to a trigger condition of at least a second message according to another embodiment of the present application, as shown in FIG. 10. It is particularly noted that the order in this embodiment does not limit the signal transmission order and implementation order in the present application.

For **the first node U01,** in step S10101, a first target signaling is received, and as a response to the reception of the first target signaling, a triggering condition of the second message is determined; in step S10102 (a), it is determined that the second message is triggered by an upper layer of the RRC sublayer of the first node U01; in step S10103 (a), both the second timer and the first timer are started or restarted; in step S10102 (b), it is determined that the second message is triggered by a paging message; in step S10103 (b), only the former of the second timer and the first timer is started or restarted.

In embodiment 10, the behavior of processing at least one of the first timer or the second timer according to the triggering condition of at least the second message includes: if the second message is triggered by an upper layer of the RRC sublayer of the first node U01, starting or restarting both the second timer and the first timer; if the second message is triggered by a paging message, starting or restarting only the former of the second timer and the first timer; the first target signaling is a MAC CE including at least a timing advance command; the second message is sent according to the first configured uplink grant.

Typically, the first target signaling is a Timing Advance Command MAC CE.

As an embodiment, the first target signaling is Absolute Timing Advance Command MAC CE.

As an embodiment, the first target signaling is not Absolute Timing Advance Command MAC CE.

As an embodiment, the first timer is running when the first target signaling is received.

As an embodiment, when the first target signaling is received, the CG-SDT process is still ongoing.

As an embodiment, when the first target signaling is received, the first node U01 is already maintaining a TAG to which the first cell belongs N_{TA}.

As an embodiment, as a response to the first target signaling being received, the timing advance command in the first target signaling is applied.

As an embodiment, as a response to the first target signaling being received, if the second message is triggered by an upper layer of the RRC sublayer of the first node U01, both the second timer and the first timer are started or restarted.

As an embodiment, as a response to the first target signaling being received, if the second message is triggered by a paging message, the second timer is started or restarted.

As a sub-embodiment of this embodiment, as a response to the first target signaling being received, if the second message is triggered by a paging message, the first timer is not started.

As a sub-embodiment of this embodiment, if the second message is triggered by a paging message, the reception of the first target signaling does not trigger the start of the first timer.

### Embodiment 11

Embodiment 11 illustrates a structural block diagram of a processing device in a first node according to an embodiment of the present application, as shown in FIG. 11. In FIG. 11, a processing device 1100 in a first node includes a first receiver 1101 and a first transmitter 1102.

A first receiver 1101 receives a first message, where the first message is an RRC message, and the first message includes at least one of time domain allocation information of a first configuration uplink grant or frequency domain allocation information of the first configuration uplink grant;
a first processor, in response to receipt of the first message, starting a first timer;
the first transmitter 1102 sends a second message, where the second message is used to request data transmission in the RRC inactive state;
the first receiver 1101 receives a first target signaling after the second message is sent;
the first processor, in response to the first target signaling being received, processing at least one of the first timer or the second timer according to a triggering condition of at least the second message; and
in embodiment 11, the first timer is used to determine whether the uplink transmission for the first configured uplink grant is aligned; the second timer is used to determine whether the uplink transmission for the first cell is aligned; the first configured uplink grant is associated with the first cell; the first target signaling is used to determine that the second message is successfully received, or the first target signaling is a MAC CE including at least a timing advance command, or the first target signaling is used to determine that contention resolution for a first random access process is successfully completed; the second message is sent according to the first configured uplink grant, or the second message is sent in a second random access process; the first random access process and the second random access process are not the same random access process.

As an embodiment, the first processor, as a response to determining to initiate the second random access process, determines whether to consider the first timer expired based on the triggering condition of at least the second message; wherein the behavior of determining whether to consider the first timer expired based on the triggering condition of at least the second message includes: if the second message is triggered by an upper layer of the RRC sublayer of the first node, the first timer is considered expired; if the second message is triggered by a paging message, the first timer is not considered expired.

As an embodiment, the first receiver 1101 receives a second target signaling as a response to the second message being sent, and the second target signaling is used to determine that the second message is successfully received; wherein the second target signaling is received before the first target signaling.

As an embodiment, the behavior of processing at least one of the first timer or the second timer according to the triggering condition of at least the second message includes: if the second message is triggered by a paging message, executing a first action set; if the second message is triggered by an upper layer of the RRC sublayer of the first node, the first action set is not executed; the first action set includes stopping the first timer or starting the second timer or clearing at least one of the first configured uplink grant; the first target signaling is used to determine that the second message is successfully received.

As an embodiment, the behavior of processing at least one of the first timer or the second timer according to the triggering condition of at least the second message includes: if the second message is triggered by an upper layer of the RRC sublayer of the first node, starting or restarting both the second timer and the first timer; if the second message is triggered by a paging message, starting or restarting only the former of the second timer and the first timer; the first target signaling is a MAC CE including at least a timing advance command; the second message is sent according to the first configured uplink grant.

As an embodiment, the behavior of processing at least one of the first timer or the second timer according to the triggering condition of at least the second message includes: if the second message is triggered by an upper layer of the RRC sublayer of the first node, stopping the second timer, and starting or restarting the first timer; if the second message is triggered by a paging message, at least one of the behaviors of "stopping the second timer, and starting or restarting the first timer" is not executed; the first target signaling is used to determine that contention resolution for the first random access process is successfully completed.

As an embodiment, the first receiver 1101 includes the antenna 452, the receiver 454, the multi-antenna receiving processor 458, the receiving processor 456, the controller/processor 459, the memory 460 and the data source 467 in FIG. 4 of the present application.

As an embodiment, the first receiver 1101 includes the antenna 452, the receiver 454, the multi-antenna receiving processor 458, and the receiving processor 456 in FIG. 4 of the present application.

As an embodiment, the first receiver 1101 includes the antenna 452, the receiver 454, and the receiving processor 456 in FIG. 4 of the present application.

As an embodiment, the first transmitter 1102 includes the antenna 452, transmitter 454, multi-antenna transmission processor 457, transmission processor 468, controller/processor 459, memory 460 and data source 467 in FIG. 4 of the present application.

As an embodiment, the first transmitter 1102 includes the antenna 452, transmitter 454, multi-antenna transmission processor 457, and transmission processor 468 in FIG. 4 of the present application.

As an embodiment, the first transmitter 1102 includes the antenna 452, the transmitter 454, and the transmission processor 468 in FIG. 4 of the present application.

As an embodiment, the first processor belongs to the first receiver 1101.

As an embodiment, the first processor belongs to the first transmitter 1102.

As an embodiment, the first processor includes a part of the first receiver 1101 and a part of the first transmitter 1102.

### Embodiment 12

Embodiment 12 illustrates a structural block diagram of a processing device in a second node according to an embodiment of the present application, as shown in FIG. 12. In FIG. 12, the processing device 1200 in the second node includes a second transmitter 1201 and a second receiver 1202.

The second transmitter 1201 sends a first message, where the first message is an RRC message, and the first message includes at least one of time domain allocation information of a first configuration uplink grant or frequency domain allocation information of the first configuration uplink grant;
the second receiver 1202 receives a second message, where the second message is used to request data transmission in the RRC inactive state;
the second transmitter 1201 sends a first target signaling after the second message is received; and
in embodiment 12, as a response to the first message being received, the receiver of the first message starts a first timer; as a response to the first target signaling being received, the receiver of the first message processes at least one of the first timer or the second timer according to the triggering condition of at least the second message; the first timer is used to determine whether the uplink transmission for the first configured uplink grant is aligned; the second timer is used to determine whether the uplink transmission for the first cell is aligned; the first configured uplink grant is associated with the first cell; the first target signaling is used to determine that the second message is successfully received, or the first target signaling is a MAC CE including at least a timing advance command, or the first target signaling is used to determine that contention resolution for a first random access process is successfully completed; the second message is sent according to the first configured uplink grant, or the second message is sent in a second random access process; the first random access process and the second random access process are not the same random access process; the sender of the second message is the receiver of the first message; the receiver of the first target signaling is the receiver of the first message.

As an embodiment, as the receiver of the first message determines the response to initiate the second random access process, the receiver of the first message determines whether to consider the first timer expired based on the triggering condition of at least the second message; wherein, the behavior of the receiver of the first message determining whether to consider the first timer expired based on the triggering condition of at least the second message includes: if the second message is triggered by an upper layer of the RRC sublayer of the receiver of the first message, the receiver of the first message considers the first timer expired; if the second message is triggered by a paging message, the first timer is not considered expired by the receiver of the first message.

As an embodiment, the second transmitter 1201 sends a second target signaling in response to the second message being received, and the second target signaling is used to determine whether the second message is successfully received; wherein the second target signaling is received before the first target signaling.

As an embodiment, the behavior of the receiver of the first message processing at least one of the first timer or the second timer according to the triggering condition of at least the second message includes: if the second message is triggered by a paging message, the receiver of the first message performs a first action set; if the second message is triggered by an upper layer of the RRC sublayer of the receiver of the first message, the first action set is not performed by the receiver of the first message; the first action set includes stopping the first timer or starting the second timer or clearing at least one of the first configured uplink grant; the first target signaling is used to determine that the second message is successfully received.

As an embodiment, the behavior of the receiver of the first message processing at least one of the first timer or the second timer according to the triggering condition of at least the second message includes: if the second message is triggered by an upper layer of the RRC sublayer of the receiver of the first message, the receiver of the first message starts or restarts both the second timer and the first timer; if the second message is triggered by a paging message, the receiver of the first message starts or restarts only the former of the second timer and the first timer; the first target signaling is a MAC CE including at least a timing advance command; the second message is sent according to the first configured uplink grant.

As an embodiment, the behavior of the receiver of the first message processing at least one of the first timer or the second timer according to the triggering condition of at least the second message includes: if the second message is triggered by an upper layer of the RRC sublayer of the receiver of the first message, the receiver of the first message stops the second timer, and starts or restarts the first timer; if the second message is triggered by a paging message, at least one of the behaviors of "stopping the second timer, and starting or restarting the first timer" is not performed by the receiver of the first message; the first target signaling is used to determine that contention resolution for the first random access process is successfully completed.

As an embodiment, the second transmitter 1201 includes the antenna 420, the transmitter 418, the multi-antenna transmission processor 471, the transmission processor 416, the controller/processor 475, and the memory 476 in FIG. 4 of the present application.

As an embodiment, the second transmitter 1201 includes the antenna 420, the transmitter 418, the multi-antenna transmission processor 471, and the transmission processor 416 in FIG. 4 of the present application.

As an embodiment, the second transmitter 1201 includes the antenna 420, the transmitter 418, and the transmission processor 416 in FIG. 4 of the present application.

As an embodiment, the second receiver 1202 includes the antenna 420, the receiver 418, the multi-antenna receiving processor 472, the receiving processor 470, the controller/processor 475, and the memory 476 in FIG. 4 of the present application.

As an embodiment, the second receiver 1202 includes the antenna 420, the receiver 418, the multi-antenna receiving processor 472, and the receiving processor 470 in FIG. 4 of the present application.

As an embodiment, the second receiver 1202 includes the antenna 420, the receiver 418, and the receiving processor 470 in FIG. 4 of the present application.

A person of ordinary skill in the art can understand that all or part of the steps in the method can be completed by instructing the relevant hardware through a program, and the program can be stored in a computer-readable storage medium, such as a read-only memory, a hard disk or an optical disk. Optionally, all or part of the steps in the above embodiment can also be implemented using one or more integrated circuits. Accordingly, each module unit in the above embodiment can be implemented in the form of hardware or in the form of a software function module, and the present application is not limited to any specific form of software and hardware combination. The user equipment, terminal and UE in the present application include but are not limited to drones, communication modules on drones, remote-controlled aircraft, aircraft, small aircraft, mobile phones, tablet computers, notebooks, vehicle-mounted communication equipment, wireless sensors, Internet cards, Internet of Things terminals, RFID terminals, NB-IOT terminals, MTC (Machine Type Communication, Machine Type Communication) terminals, eMTC (enhanced MTC, enhanced MTC) terminals, data cards, Internet cards, vehicle-mounted communication equipment, low-cost mobile phones, low-cost tablet computers and other wireless communication devices. The base stations or system devices in this application include but are not limited to macrocell base stations, microcell base stations, home base stations, relay base stations, gNB (NR Node B), NR Node B, TRP (Transmitter Receiver Point) and other wireless communication devices.

The above only represents preferred embodiments of the present application and is not intended to limit the protection scope of the present application. Any modification, equivalent replacement, improvement, etc. made within the spirit and principle of the present application shall be included in the protection scope of the present application.

## Claims

1. A first node used for wireless communication, comprising:
a first receiver receives a first message, wherein the first message is an RRC message, and the first message includes at least one of time domain allocation information of a first configuration uplink grant or frequency domain allocation information of the first configuration uplink grant;
a first processor, in response to receipt of the first message, starting a first timer;
a first transmitter sends a second message, wherein the second message is used to request data transmission in the RRC inactive state;
the first receiver receives first target signaling after the second message is sent;
the first processor, in response to the first target signaling being received, processing at least one of the first timer or the second timer according to a triggering condition of at least the second message; and
wherein, the first timer is used to determine whether the uplink transmission for the first configured uplink grant is aligned; the second timer is used to determine whether the uplink transmission for the first cell is aligned; the first configured uplink grant is associated with the first cell; the first target signaling is used to determine that the second message is successfully received, or the first target signaling is a MAC CE including at least a timing advance command, or the first target signaling is used to determine that contention resolution for a first random access process is successfully completed; the second message is sent according to the first configured uplink grant, or the second message is sent in a second random access process; the first random access process and the second random access process are not the same random access process.

2. The first node according to claim 1, **characterized in that** it comprises:
the first processor, in response to determining to initiate the second random access procedure, determines whether to consider the first timer expired according to at least a triggering condition of the second message; and
the behavior determines whether to consider the first timer expired based on the triggering condition of at least the second message, including: if the second message is triggered by an upper layer of the RRC sublayer of the first node, the first timer is considered expired; if the second message is triggered by a paging message, the first timer is not considered expired.

3. The first node according to claim 1 or 2, **characterized in that** it comprises:
the first receiver receives second target signaling as a response to the second message being sent, the second target signaling being used to determine that the second message is successfully received; and
the second target signaling is received before the first target signaling.

4. The first node according to claim 1 or 2 is **characterized in that** the behavior processes at least one of the first timer or the second timer according to the triggering condition of at least the second message, including: if the second message is triggered by a paging message, executing a first action set; if the second message is triggered by an upper layer of the RRC sublayer of the first node, the first action set is not executed; the first action set includes stopping the first timer or starting the second timer or clearing at least one of the first configured uplink grant; the first target signaling is used to determine that the second message is successfully received.

5. The first node according to any one of claims 1 to 3 is **characterized in that** the behavior of processing at least one of the first timer or the second timer according to the triggering condition of at least the second message includes: if the second message is triggered by an upper layer of the RRC sublayer of the first node, starting or restarting both of the second timer and the first timer; if the second message is triggered by a paging message, starting or restarting only the former of the second timer and the first timer; the first target signaling is a MAC CE including at least a timing advance command; and the second message is sent according to the first configured uplink grant.

6. The first node according to any one of claims 1 to 3 is **characterized in that** the behavior of processing at least one of the first timer or the second timer according to the triggering condition of at least the second message includes: if the second message is triggered by an upper layer of the RRC sublayer of the first node, stopping the second timer, and starting or restarting the first timer; if the second message is triggered by a paging message, at least one of the behaviors of "stopping the second timer, and starting or restarting the first timer" is not executed; the first target signaling is used to determine that the contention resolution for the first random access process is successfully completed.

7. A second node used for wireless communication, comprising:
a second transmitter sends a first message, wherein the first message is an RRC message, and the first message includes at least one of time domain allocation information of a first configuration uplink grant or frequency domain allocation information of the first configuration uplink grant;
a second receiver, receiving a second message, wherein the second message is used to request data transmission in the RRC inactive state;
the second transmitter sends a first target signaling after the second message is received; and
wherein, as a response to the first message being received, the receiver of the first message starts a first timer; as a response to the first target signaling being received, the receiver of the first message processes at least one of the first timer or the second timer according to the triggering condition of at least the second message; the first timer is used to determine whether the uplink transmission for the first configured uplink grant is aligned; the second timer is used to determine whether the uplink transmission for the first cell is aligned; the first configured uplink grant is associated with the first cell; the first target signaling is used to determine that the second message is successfully received, or the first target signaling is a MAC CE including at least a timing advance command, or the first target signaling is used to determine that contention resolution for a first random access process is successfully completed; the second message is sent according to the first configured uplink grant, or the second message is sent in a second random access process; the first random access process and the second random access process are not the same random access process; the sender of the second message is the receiver of the first message; the receiver of the first target signaling is the receiver of the first message.

8. A method in a first node for wireless communication, comprising:
receiving a first message, wherein the first message is an RRC message, and the first message includes at least one of time domain allocation information of a first configuration uplink grant or frequency domain allocation information of the first configuration uplink grant;
in response to receiving the first message, starting a first timer;
sending a second message, wherein the second message is used to request data transmission in the RRC inactive state;
after the second message is sent, receiving first target signaling;
in response to receiving the first target signaling, processing at least one of the first timer or the second timer according to a triggering condition of at least the second message; and
the first timer is used to determine whether the uplink transmission for the first configured uplink grant is aligned; the second timer is used to determine whether the uplink transmission for the first cell is aligned; the first configured uplink grant is associated with the first cell; the first target signaling is used to determine that the second message is successfully received, or the first target signaling is a MAC CE including at least a timing advance command, or the first target signaling is used to determine that contention resolution for a first random access process is successfully completed; the second message is sent according to the first configured uplink grant, or the second message is sent in a second random access process; the first random access process and the second random access process are not the same random access process.

9. A method used in a second node of wireless communication, comprising:
sending a first message, wherein the first message is an RRC message, and the first message includes at least one of time domain allocation information of a first configuration uplink grant or frequency domain allocation information of the first configuration uplink grant;
receiving a second message, the second message being used to request data transmission in the RRC inactive state;
after the second message is received, sending a first target signaling; and
wherein, as a response to the first message being received, the receiver of the first message starts a first timer; as a response to the first target signaling being received, the receiver of the first message processes at least one of the first timer or the second timer according to the triggering condition of at least the second message; the first timer is used to determine whether the uplink transmission for the first configured uplink grant is aligned; the second timer is used to determine whether the uplink transmission for the first cell is aligned; the first configured uplink grant is associated with the first cell; the first target signaling is used to determine that the second message is successfully received, or the first target signaling is a MAC CE including at least a timing advance command, or the first target signaling is used to determine that contention resolution for a first random access process is successfully completed; the second message is sent according to the first configured uplink grant, or the second message is sent in a second random access process; the first random access process and the second random access process are not the same random access process; the sender of the second message is the receiver of the first message; the receiver of the first target signaling is the receiver of the first message.
